# EUROPÄISCHE PATENTSCHRIFT

(11) **EP 3 775 059 B1**
(45) Veröffentlichungstag und Bekanntmachung des Hinweises auf die Patenterteilung: **20.04.2022**
(21) Anmeldenummer: 19701852.6
(22) Anmeldetag: 25.01.2019
(51) Int. Cl.: C09D 5/14

(54) **ANTIMIKROBIELLE BEVORRATUNG VON WASSER ODER WÄSSRIGEN LÖSUNGEN INSBESONDERE IN KRAFTFAHRZEUGEN**
ANTIMICROBIAL STORAGE OF WATER OR AQUEOUS SOLUTIONS ESPECIALLY IN MOTOR VEHICLES
APPROVISIONNEMENT ANTIMICROBIEN EN EAU OU EN SOLUTIONS AQUEUSES, EN PARTICULIER DANS DES VÉHICULES AUTOMOBILES

(30) Priorität: 26.03.2018 DE 102018107149
(43) Veröffentlichungstag der Anmeldung: 17.02.2021
(73) Patentinhaber: Kautex Textron GmbH & Co. KG, 53229 Bonn (DE)
(72) Erfinder: EBERHARDT, Agnes, 53225 Bonn (DE); HEIDEMEYER, Timm, 50679 Köln (DE); METSAHEL, Sammy, 53129 Bonn (DE)
(74) Vertreter: Richly & Ritschel Patentanwälte PartG mbB
(86) Internationale Anmeldenummer: PCT/EP2019/051866
(87) Internationale Veröffentlichungsnummer: WO 2019/185214

(56) Entgegenhaltungen:
- WO-A1-2006/101438
- WO-A1-2009/041837
- DE-A1-102007 048 107

## Beschreibung

Die vorliegende Erfindung betrifft einen Behälter für die antimikrobielle Bevorratung von Wasser oder wässrigen Lösungen, insbesondere einen in ein Kraftfahrzeug eingebauten Behälter. Weiterhin betrifft die vorliegende Erfindung auch ein Verfahren zur antimikrobiellen Behandlung von Wasser oder wässrigen Lösungen unter Verwendung des erfindungsgemäßen Behälters.

Wasser bietet den Lebensraum für eine Vielzahl von Organismen, insbesondere von Mikroorganismen. Dementsprechend kommt es selbst in abgeschlossenen Behältern bei der Bevorratung von sogar hochreinem Wasser oder wässrigen Lösungen im Laufe der Zeit zu einer Vermehrung solcher Organismen, wenn nicht geeignete Gegenmaßnahmen ergriffen werden.

Die Vermehrung der Organismen kann dann dazu führen, dass das Wasser oder die wässrige Lösung nicht mehr für den vorgesehenen Zweck verwendet werden kann. Beispielsweise kann zum Verzehr vorgesehenes Wasser aus hygienischen Gründen unbrauchbar werden.

Auch im Bereich der Kraftfahrzeuge finden Wasser oder wässrige Lösungen rege Verwendung, beispielsweise als Betriebsflüssigkeit für die Wasserinjektion bei Verbrennungsmotoren zur Emissionsreduktion und/oder zur Leistungssteigerung oder als Betriebsflüssigkeit zur Reinigung von Scheiben, Scheinwerfern und/oder Sensoren eines Kraftfahrzeugs.

Im Folgenden wird lediglich der einfachen Lesbarkeit halber der Begriff der (wässrigen) Betriebsflüssigkeit, insbesondere für Kraftfahrzeuge verwendet, um Wasser oder eine wässrige Lösung zu bezeichnen. Eine Betriebsflüssigkeit stellt jedoch nur eine bevorzugte Ausführungsform von Wasser oder einer wässrigen Lösung dar.

Wässrige Betriebsflüssigkeiten für Kraftfahrzeuge werden häufig in Behältern bevorratet, um für ihren bestimmungsgemäßen Einsatz bereit zu stehen. Hierbei wird die Betriebsflüssigkeit teilweise mehrere Monate lang gelagert, wodurch es zu der oben beschriebenen Vermehrung von Mikroorganismen in der Betriebsflüssigkeit kommen kann. Eine solche Vermehrung kann insbesondere dann verstärkt werden, wenn das Kraftfahrzeug beispielsweise im Sommer, d. h. bei höheren Temperaturen, längere Zeit außer Betrieb bleibt.

Der Anstieg der Anzahl der Mikroorganismen in der Betriebsflüssigkeit kann sich nachteilig auf den ordnungsgemäßen Betrieb des Kraftfahrzeugs auswirken. Insbesondere kann es zur Ausbildung von Biofilmen kommen, die beispielsweise Filter und Dosiereinheiten des Kraftfahrzeugs zusetzen und hierüber beschädigen oder außer Betrieb setzen können. Insbesondere soll hierbei beispielhaft ein zugesetzter Filter in einem Wasserinjektionssystem für Verbrennungsmotoren genannt werden. Dieses führt dazu, dass die ebenfalls in dem System vorhandene Pumpe ihre Leistung nicht mehr erbringen kann, wodurch das Wasserinjektionssystem versagt.

Im Stand der Technik sind bereits eine Vielzahl von Verfahren bekannt, die für eine antimikrobielle Behandlung von wässrigen Lösungen eingesetzt werden und die im Wesentlichen in zwei Gruppen fallen, nämlich die physikalische oder die chemische antimikrobielle Behandlung. Beispiele für physikalische Verfahren sind das Abtöten der Mikroorganismen durch UV-Licht oder durch thermische Entkeimung. Beispiele für chemische Verfahren sind der Einsatz von oxidativen Gasen oder Metallionen (insbesondere Silberionen).

Nachteilig an den physikalischen Verfahren ist es jedoch, dass diese eine Energieversorgung benötigen, was insbesondere bei längere Zeit nicht betriebenen Kraftfahrzeugen problematisch ist. Nachteilig an den chemischen Verfahren ist es, dass die Konzentration der zugegebenen antimikrobiellen Substanz im Laufe der Zeit so wie insbesondere mit Entnahme der Betriebsflüssigkeit und erneutem Auffüllen des Behälters abnimmt. Dementsprechend müssen die antimikrobiellen Substanzen ebenfalls regelmäßig nachgefüllt werden, um eine anhaltende ordnungsgemäße antimikrobielle Bevorratung der Betriebsflüssigkeit zu gewährleisten.

Wünschenswert wäre es daher, die Betriebsflüssigkeit ohne eine Energieversorgung und ohne das Erfordernis des Nachfüllens einer antimikrobiell wirkenden Substanz - gegebenenfalls auch über einen längeren Zeitraum hinweg und trotz Auffüllvorgängen mit der Betriebsflüssigkeit - antimikrobiell bevorraten zu können.

Diese Aufgaben werden erfindungsgemäß durch einen Behälter und ein Verfahren mit den in Anspruch 1 bzw. Anspruch 15 angegebenen Merkmalen gelöst. Vorteilhafte Ausgestaltungen sind in den Unteransprüchen angegeben.

Kern der vorliegenden Erfindung ist die Bereitstellung eines Behälters, in dessen Innenraum eine Zusammensetzung eingebracht wird, die aufgrund von in ihr enthaltenen Komplexverbindungen eines Metallsalzes mit einem Organoliganden eine antimikrobielle Wirkung aufweist. Die Komplexverbindungen liegen hierbei eingebettet in eine Matrix aus einem hydrophilen Polymer vor. Aufgrund der Hydrophilie des Polymers erfolgt bei diesem eine Quellung, wenn es mit dem Wasser oder der wässrigen Lösung der Betriebsflüssigkeit kontaktiert wird. Hierbei dringen die Wassermoleküle der Betriebsflüssigkeit zumindest in die oberflächennahen Schichten der antimikrobiellen Zusammensetzung ein und waschen die dort befindlichen Metalle als Metallionen entlang eines Konzentrationsgradienten in die umgebende Betriebsflüssigkeit aus. In dieser entfalten sie dann ihre antimikrobielle Wirkung.

Dementsprechend wird mittels der erfindungsgemäßen antimikrobiellen Zusammensetzung eine gleichmäßige und langanhaltende Abgabe von Metallionen in die Betriebsflüssigkeit erreicht. Neben dieser Depotwirkung kann vorteilhafter Weise die Konzentration der antimikrobiellen Metallionen in der Betriebsflüssigkeit über die Konzentration des Metalls in der antimikrobiellen Zusammensetzung bestimmt werden.

Im Genaueren weist der erfindungsgemäße Behälter für die antimikrobielle Bevorratung von Wasser oder wässrigen Lösungen eine antimikrobielle Zusammensetzung auf, die im Innenraum des Behälters angeordnet ist, wobei die antimikrobielle Zusammensetzung ein hydrophiles Polymer sowie eine Komplexverbindung eines antimikrobiell wirkenden Metallsalzes mit einem Organoliganden aufweist. Mit anderen Worten liegt eine Mischung aufweisend eine Koordinationsverbindung eines Organoliganden mit einem komplexierten antimikrobiell wirkenden Metallion mit einem hydrophilen Polymer vor.

Bei dem Behälter kann es sich um jeden geeigneten Behälter für die aufzunehmende Betriebsflüssigkeit, d. h. für Wasser oder eine wässrige Lösung handeln. Dementsprechend kann der Behälter bevorzugt als Betriebsflüssigkeitsbehälter bezeichnet werden. Besonders bevorzugt handelt es sich bei dem Behälter um einen Betriebsflüssigkeitsbehälter für Wasser, Trinkwasser, Wasser für die Wasserinjektion bei Verbrennungsmotoren und wässrige Reinigungslösungen, insbesondere für die Scheiben, Scheinwerfer und/oder Sensoren eines Kraftfahrzeugs.

Weiter bevorzugt ist der Behälter ein Hohlkörper, der vorzugsweise im Wesentlichen geschlossen ist. Hierunter wird verstanden, dass insbesondere verschließbare Öffnungen, sowie Leitungen zur Befüllung oder zur Entnahme der Betriebsflüssigkeit an den Behälter vorgesehen sein können. Weitere verschließbare und bevorzugte Öffnungen sind Öffnungen, durch welche Einbauteile in das Innere des Behälters eingebracht oder aus diesem entnommen werden können. Weiterhin sind bevorzugt ebenfalls Ventile in der Wandung des Behälters vorhanden, besonders bevorzugt Be- und/oder Entlüftungsventile.

Der Behälter weist weiterhin einen Innenraum auf, der durch die innere Oberfläche der Wandung des Behälters definiert und/oder von dieser umschlossen wird. Der Behälter weist im Allgemeinen gegenüberliegende Seitenwände auf, die über einen Behälterboden oder eine Behälterunterseite sowie eine Behälterdecke oder eine Behälteroberseite miteinander verbunden sind. Behälterboden und Behälterdecke sind ebenfalls gegenüberliegend angeordnet. Der Behälter kann weiter bevorzugt zwei Halbschalen, eine Oberschale und eine Unterschale aufweisen, die noch bevorzugter miteinander verschweißt wurden. Bevorzugt ist der Behälter in Wesentlichen quaderförmig ausgebildet.

Die antimikrobielle Zusammensetzung ist erfindungsgemäß innerhalb des Innenraums des Behälters angeordnet. Hierbei wird bevorzugt, dass die antimikrobielle Zusammensetzung ein nichttragendes Element des Behälters ist. Mit anderen Worten ist die antimikrobielle Zusammensetzung nicht für die (Form-)Stabilität des Behälters wesentlich. Weiter bevorzugt weist der Innenraum des Behälters ein Volumen von 10.000 cm³ auf.

Der Behälter kann ein Kunststoffbehälter sein, wobei er bevorzugt HDPE und/oder Polypropylen als Kunststoff aufweist und noch bevorzugter aus HDPE und/oder Polypropylen besteht. Ein ganz besonders bevorzugter Kunststoff ist Lupolen, insbesondere Lupolen GX5038. Weiter vorzugsweise ist der Kunststoffbehälter im Spritzgussverfahren, im Blasformverfahren oder im Extrusionsblasformverfahren hergestellt worden. Hierbei kann der Kunststoffbehälter vorteilhafter Weise leicht an die speziellen Formerfordernisse eines Kraftfahrzeugs angepasst werden. Dies gilt insbesondere für einen ganz besonders bevorzugten spritzgegossenen Behälter.

Der Behälter weist weiter bevorzugt eine einschichtige Wand auf.

Der Behälter ist geeignet für die Aufnahme von Wasser oder einer wässrigen Lösung. Das Wasser ist bevorzugt Wasser für die Wasserinjektion bei Verbrennungsmotoren, Leitungswasser, Trinkwasser, deionisiertes Wasser oder destilliertes Wasser, wobei deionisiertes oder destilliertes Wasser besonders bevorzugt werden. Besonders bevorzugte wässrige Lösungen sind wässrige Reinigungslösungen, insbesondere solche zur Reinigung von Scheiben, Scheinwerfern und/oder Sensoren eines Kraftfahrzeugs. In einer weiteren bevorzugten Ausführungsform enthält der erfindungsgemäße Behälter Wasser oder eine wässrige Lösung.

Der Behälter ist weiterhin geeignet für die antimikrobielle Bevorratung von Wasser oder wässrigen Lösungen. Unter den Begriff antimikrobielle Bevorratung soll im Sinne der Erfindung verstanden werden, dass die Zunahme der Anzahl der in der Betriebsflüssigkeit enthaltenen Mikroorganismen reduziert wird und bevorzugt verhindert wird. Weiter bevorzugt wird unter dem Begriff antimikrobielle Bevorratung verstanden, dass die Anzahl der in der Betriebsflüssigkeit enthaltenen Mikroorganismen reduziert wird. Noch bevorzugter wird unter dem Begriff antimikrobielle Bevorratung verstanden, dass eine Reduktion der Anzahl der in der Betriebsflüssigkeit enthaltenen Mikroorganismen um zumindest 50 %, noch bevorzugter zumindest 70 %, noch bevorzugter zumindest 90 % oder zumindest 98 % und am bevorzugtesten um 100 % erreicht wird. Bei einer Reduktion der Anzahl der in der Betriebsflüssigkeit enthaltenen Mikroorganismen um zumindest 98 % kann auch von einer Betriebsflüssigkeit gesprochen werden, die im Wesentlichen frei von Mikroorganismen ist.

Weiter bevorzugt tritt die Reduktion der Anzahl der in der Betriebsflüssigkeit enthaltenen Mikroorganismen nach einer Inkubationszeit ein. Diese ist unter anderem abhängig von der Anzahl der in der Betriebsflüssigkeit enthaltenen Mikroorganismen und der Menge der in den Behälter eingebrachten Metallionen bzw. der Konzentration der Metallionen in der Betriebsflüssigkeit, die sich bei Inkubation der Betriebsflüssigkeit mit der erfindungsgemäßen antimikrobiellen Zusammensetzung einstellt.

Bevorzugte liegt die Inkubationsdauer bei ≥ 1 Tag, ≥ 4 Tagen, ≥ 6 Tagen, ≥ 8 Tagen, ≥ 10 Tagen, ≥ 14 Tagen, ≥ 20 Tagen oder ≥ 22 Tagen.

Die Mikroorganismen können jegliche dem Fachmann bekannte Mikroorganismen seien, die eine Suszeptibilität für die erfindungsgemäß verwendeten Metallionen aufweisen. Vorzugsweise handelt es sich hierbei um einzellige oder mehrzellige Mikroorganismen. Weiter vorzugsweise handelt es sich bei dem Mikroorganismus um eine Alge, ein Pilz oder, besonders bevorzugt, ein Bakterium. Noch weiter bevorzugt ist das Bakterium gramnegatives Bakterium. Solche Bakterien zeigen vorteilhafter Weise eine größere Suszeptibilität gegen die erfindungsgemäß verwendeten Metallionen.

Die antimikrobielle Zusammensetzung weist ein hydrophiles Polymer sowie eine Komplexverbindung eines Metallsalzes mit einem Organoliganden auf. Das Metallsalz und/oder das Metallion des Metallsalzes ist ein antimikrobiell wirkendendes Metallsalz und/oder Metallion. Die antimikrobielle Zusammensetzung kann im Wesentlichen aus lediglich diesen beiden Komponenten bestehen, beispielsweise einen Gesamtanteil von ≥ 80 Gew.-%, ≥ 90 Gew.-%, ≥ 98 Gew.-% oder ≥ 99 Gew.-% der Mischung des hydrophilen Polymers mit der Komplexverbindung aufweisen. Die antimikrobielle Zusammensetzung kann vorzugsweise weitere übliche Additive, Füllstoffe, Verarbeitungshilfsmittel, Farbpigmente oder Gleitmittel enthalten.

Bei dem hydrophilen Polymer kann es sich um jedes geeignetes Polymer handeln, welches ein Quellen bei Kontaktierung mit Wasser zeigt. Das Polymer kann ein natürliches, ein modifiziertes natürliches oder ein künstliches Polymer sein. Ein künstliches hydrophiles Polymer wird im Sinne der Erfindung besonders bevorzugt.

Beispiele für bevorzugte natürliche Polymere sind Gelatine, Galactose-Polymere und, besonders bevorzugt, Agar.

Bevorzugte künstliche Polymere sind Thermoplasten und/oder Polymere auf Carbonsäureesterbasis, bevorzugter auf Basis von Acrylsäureester, Aminocarbonsäureester, Benzolcarbonsäureester, Buttersäureester, Carbamat, Dicarbonsäureester, Essigsäureester, Hydroxycarbonsäureester (insbesondere Alpha- oder Beta-Hydroxycarbonsäureester) oder Lacton. Besonders bevorzugt ist das hydrophile Polymer ein Acrylat und/oder ein Polyamid, noch bevorzugter ein Polyamid. Polyamide können vorteilhafterweise besonders viel Wasser (bis zu 3,7 %) aufnehmen.

Das Polymer kann weiter bevorzugt ein Copolymer oder ein Block-Copolymer sein.

Das Polyamid kann jedes geeignete Polyamid sein. Besonders bevorzugt ist das Polyamid ausgewählt aus der Gruppe bestehend aus Polyamid 6, Polyamid 6.6, Polyamid 6.10, Polyamid 6.12, Polyamid 11, Polyamid 12 und Mischungen davon. Das Polyamid kann weiter bevorzugt ein Co-Polyamid, ein Block-Co-Polyamid oder ein Polyamid-Blend sein. Co-Polyamid 6/66, beispielsweise erhältlich unter dem Handelsnamen Ultramid C33; BASF, wird ganz besonders bevorzugt, da es einen niedrigen Schmelzpunkt und hervorragende Verarbeitungseigenschaften aufweist.

Bevorzugt handelt es sich bei dem hydrophilen Polymer um ein dendritisches Polymer, das auch als hochverzweigtes Polymer bezeichnet werden kann. Weiter bevorzugt handelt es sich bei dem hochverzweigtes Polymer um ein Dendrimer.

Der Organoligand kann jeder geeignete Organoligand sein, der eine Komplexierung des Metallions des Metallsalzes ermöglicht. Bevorzugt handelt es sich bei dem Organoliganden um ein komplexbildendes Polymer.

Bei dem Organoliganden handelt es sich noch weiter bevorzugt um ein verzweigtes oder hochverzweigtes (*hyperbranched*) Polymer bzw. komplexbildendes Polymer. Ebenfalls bevorzugt handelt es sich im ein dendritisches Polymer bzw. komplexbildendes Polymer.

Weiter bevorzugt chelatiert der Organoligand das erfindungsgemäße Metallion. Mit anderen Worten stellt das erfindungsgemäße Metallion das Zentralteilchen des gebildeten Komplexes dar.

Der Organoligand kann jede beliebige Verbindung der organischen Chemie sein, die zur Komplexbildung mit dem erfindungsgemäßen Metallion in der Lage ist. Bevorzugt basiert der Organoligand auf einer Carbonsäure oder auf Ethylenimin. Mit anderen Worten ist der Organoligand bevorzugt ein Derivat einer Carbonsäure oder das Polymerisationsprodukt eines Ethylenimins, d.h. ein Polyethylenimin. Das Polyethylenimin weist weiter bevorzugt ≥ 6 und ≤ 1000 Monomereinheiten auf, noch bevorzugter handelt es sich um ein hochmolekulares Polyethylenimin. Der Organoligand ist ebenfalls bevorzugt ein Polyesterpolyol. Ein besonders bevorzugtes Polyethylenimin ist das von BASF erhältliche LUPASOL. Ein besonders bevorzugtes Polyesterpolyol ist Bolthorn H40.

Basiert der Organoligand auf einer Carbonsäure so ist der erfindungsgemäße Organoligand bevorzugt ein 2-Oxazolinderivat einer organischen Carbonsäure, bevorzugter einer aliphatischen Monocarbonsäure, noch bevorzugter einer aromatischen Dicarbonsäure.

Handelt es sich bei dem erfindungsgemäßen Organoliganden um ein Polyethylenimin oder ein Polyesterpolyol, ist das Polyethylenimin oder das Polyesterpolyol weiter bevorzugt ein amphiphil modifiziertes Polyethylenimin bzw. Polyesterpolyol. Noch bevorzugter ist das amphiphil modifizierte Polyethylenimin bzw. Polyesterpolyol mit einer n-Alkancarbonsäure amphiphil modifiziert worden. Weiter bevorzugt ist die zur amphiphilen Modifizierung des Polyethylenimin bzw. Polyesterpolyols verwendete n-Alkancarbonsäure eine C8 bis C22 n-Alkancarbonsäure, noch bevorzugter eine C8, C16 oder C22 n-Alkancarbonsäure. Die bevorzugtesten n-Alkancarbonsäuren sind n-Octansäure, n-Hexadecansäure und n-Docosansäure. Die amphiphile Modifizierung erfolgt bevorzugt durch Amidierung von Polyethylenimin bzw. die Veresterung von Polyesterpolyol unter Einsatz der n-Alkancarbonsäuren und wie beispielsweise beschrieben in C. Aymonier, U. Schlotterbeck, L. Antonietti, P. Zacharias, R. Thomann, J.C. Tiller, S. Mecking, Chem. Commun. 2002, 301 bzw. EP 1557441 A2.

2-Oxazoline werden auch als 4,5-Dihydrooxazole bezeichnet. Sie sind heterozyklische 5-Ringverbindungen, die jeweils ein Sauerstoffatom, ein Stickstoffatom und eine Doppelbindung im Ring enthalten. Die erfindungsgemäß besonders bevorzugten 2-Oxazoline enthalten die Heteroatome Sauerstoff in 1-Stellung, den Stickstoff in 3-Stellung, die Doppelbindung im heterozyklischen Ring befindet sich zwischen dem Kohlenstoffatom 2 und dem Stickstoffatom. 2-Oxazoline können bei der Dehydratisierung von N-(2-Hydroxyalkyl)-amiden durch intermolekulare Zyklisierung gewonnen werden. Alternativ können β-Halogen-alkylamide mit starken Basen, wie z.B. alkoholischen Alkalien, umgesetzt werden. Ebenfalls können sie durch Kondensationsreaktionen von 1,2-Aminoalkoholen mit Carbonsäureestern, Carbonsäureamiden oder Nitrilen erhalten werden. 2-Oxazoline als Derivate organischer Carbonsäuren werden erfindungsgemäß besonders bevorzugt.

Bei der organischen Carbonsäure kann es sich um jede beliebige und geeignete organische Carbonsäure handeln. Vorzugsweise ist die organische Carbonsäure aliphatischer, aromatischer oder aliphatisch-aromatischer Natur. Weiter vorzugsweise ist die organische Carbonsäure monofunktionell, difunktionell oder polyfunktionell (bevorzugt trifunktionell) hinsichtlich der Anzahl der vorhandenen Carbonsäuregruppen. Besonders bevorzugt ist die organische Carbonsäure ausgewählt aus der Gruppe bestehend aus Palmitinsäure [CAS 57-10-3], Stearinsäure [CAS 57-11-4], Behensäure [CAS 112-85-6], 10-Undecensäue [CAS 112-38-9], Linolensäure [CAS 463-40-1], Ölsäure [CAS 112-80-1], Erucasäure [CAS 112-86-7], Oxalsäure [CAS 144-62-7], Adipinsäure [CAS 124-04-9], Isophthalsäure [CAS 121-91-5], Terephthalsäure [CAS 100-21-0], 2-Bromterephthalsäure [CAS 586-35-6] und Trimesinsäure [CAS 55-95-0].

Der Organoligand ist bevorzugt ein 2-Oxazolinderivat einer organischen Carbonsäure und ausgewählt aus der Gruppe bestehend aus Palmitinsäure-2-oxazolin, Stearinsäure-2-oxazolin, 10-Undecensäure-2-oxazolin, Behensäure-2-oxazolin, Erucasäure-2-oxazolin, Linolensäure-2-oxazolin, Ölsäure-2-o-xazolin, Oxalsäure-2,2'-bis(2-oxazolin), Isophthalsäure-1,3-bis(2-oxazolin), Terephthalsäure-1,4-bis(2-oxazolin), Adipinsäure-1,6-bis(2-oxazolin), Trimesinsäure-tris-(2-oxazolin), 1,3-Phenyl-bis-(2-oxazolin), 1,4-Phenyl-bis-(2-oxazolin) und 2,2'-Bis-(2-oxazolin). Besonders bevorzugt ist der Organoligand ausgewählt aus der Gruppe bestehend aus Stearinsäure-2-oxazolin, Behensäure-2-oxazolin, 1,3-Phenyl-bis-(2-oxazolin), 1,4-Phenyl-bis-(2-oxazolin) und 2,2'-Bis-(2-oxazolin).

Bei dem Metallsalz kann es sich um jegliches geeignetes Metallsalz handeln. Bevorzugt geht dessen Metallion mit dem Organoliganden eine Komplexverbindung ein und weist eine antimikrobielle Wirkung auf. Weiter bevorzugt handelt es sich bei dem erfindungsgemäßen Metall bzw. dem Metallion des Metallsalzes um ein Übergangsmetall. Bevorzugter ist das Metallion ein Kation. Noch bevorzugter ist das Metall bzw. das Metallion ausgewählt aus der Gruppe bestehend aus Ag, Co, Cu, Mn, Mo, Os, Sn, Ti und Zn, bevorzugter Ag, Cu, Os, Mo und Zn. Am bevorzugtesten ist das Metall Silber (Ag), bzw. das Metallion ein Silberkation (Ag⁺). Das bevorzugteste Metallsalz ist AgNO₃.

Zur Darstellung der erfindungsgemäßen Komplexverbindung eines Metallsalzes mit einem Organoliganden wird zumindest eines der zuvor aufgeführten Metallsalze in einem geeigneten Lösungsmittel oder Lösungsmittelgemisch, vorzugsweise vollständig, aufgelöst. Gleichsam wird zumindest einer der zuvor aufgeführten Organoliganden in einem geeigneten Lösungsmittel, vorzugsweise vollständig, aufgelöst. Danach werden diese beiden Lösungen zu einer Mischung vermengt.

Geeignete und bevorzugte Lösungsmittel im Sinne der Erfindung sind aliphatische primäre Alkohole, wie beispielsweise Methanol, Ethanol, n-Propanol, Isopropanol und Butanol, sowie halogenierte Kohlenwasserstoffe wie die Dichlormethan, Chloroform oder Tetrachlorkohlenstoff. Besonders bevorzugte Lösungsmittel sind Methanol, Chloroform, Toluol, Ethanol oder n-Propanol. Weiter bevorzugt ist das für das Metallsalz verwendete Lösungsmittel oder Lösungsmittelgemisch und das für den Organoliganden verwendete Lösungsmittel vollständig miteinander mischbar, noch bevorzugter identisch.

Weiter bevorzugt beträgt die Konzentration des Organoliganden und/oder des Metallsalzes in den zu vermischenden Lösungen 0,1 bis 1 mol/l, bevorzugt 0,2 bis 0,4 mol/l. Weiter bevorzugt liegen der Organoligand und das Metallsalzion in dem Gemisch in einem äquimolaren Verhältnis vor, wobei dieses Verhältnis von der chemischen Struktur des Organoliganden und nicht von der Art des verwendeten Metallsalzes abhängig ist. Besonders bevorzugte äquimolaren Verhältnisse im Sinne der Erfindung sind 2:1, 1:1 oder 1:2 mol/mol von Organoliganden zum Metallsalzion.

Die Mischung aus zumindest einem gelösten Organoliganden und zumindest einem gelösten Metallion wird bei einer Temperatur zwischen 20 °C und 60 °C, vorzugsweise zwischen 22 °C und 28 °C für einen Zeitraum von 1-6 Stunden, vorzugsweise 2-3 Stunden intensiv vermischt. Hierbei fallen die erfindungsgemäßen gebildeten Komplexverbindungen aus der Mischung aus und können auf übliche Weise, beispielsweise Filtration, Reinigung durch Wäsche und Trocknung, isoliert werden.

Generell können sämtliche antibakteriell wirksame Metalle bzw. Metallsalze mit sämtlichen genannten Organoliganden zu der erfindungsgemäßen Komplexverbindung kombiniert werden. Ganz besonders bevorzugt wird die erfindungsgemäße Komplexverbindung jedoch dargestellt aus einem Organoliganden ausgewählt aus der Gruppe bestehend aus Polyethylenimin, Polyesterpolyol, Stearinsäure-2-oxazolin, Behensäure-2-oxazolin, 1,3-Phenyl-bis-(2-oxazolin), 1,4-Phenyl-bis-(2-oxazolin) und 2,2'-Bis-(2-oxazolin), sowie Silbernitrat. Noch bevorzugter wird die erfindungsgemäße Komplexverbindung dargestellt aus einem Organoliganden ausgewählt aus der Gruppe bestehend aus amphiphil modifiziertes Polyethylenimin, amphiphil modifiziertes Polyesterpolyol, Stearinsäure-2-oxazolin, Behensäure-2-oxazolin, 1,3-Phenyl-bis-(2-oxazolin), 1,4-Phenyl-bis-(2-oxazolin) und 2,2'-Bis-(2-oxazolin), sowie Silbernitrat. Eine Komplexverbindung dargestellt aus einem amphiphil modifizierten Polyethylenimin sowie Silbernitrat ist am bevorzugtesten.

Die erfindungsgemäßen Komplexverbindungen können dann mit dem hydrophilen Polymer, ganz besonders bevorzugt mit einem Polyamid, vermischt werden, um die antimikrobielle Zusammensetzung bereitzustellen. Hierbei wird üblicherweise mindestens ein hydrophiles Polymer mit mindestens einer Komplexverbindung vermischt. Dies kann in gebräuchlichen Mischeinrichtungen erfolgen. Hierbei wird das hydrophilen Polymer beispielsweise als Granulat mit der pulverförmigen Komplexverbindung vorgemischt, die Mischung in einem geeigneten Apparat aufgeschmolzen und in der Schmelze homogenisiert. Zusätzlich oder alternativ und erfindungsgemäß bevorzugt wird die Komplexverbindung dem reinen oder bereits mit der Komplexverbindung versetzten hydrophilen Polymer während der Extrusion beigemischt. Dies geschieht weiter bevorzugt mittels einer Seitenstromdosiereinrichtung an der Extrusionsvorrichtung.

In der erfindungsgemäßen antimikrobiellen Zusammensetzung liegen die erfindungsgemäßen Komplexverbindungen bevorzugt in das hydrophile Polymer eingebettet und weiter vorzugsweise mit Partikelgrößen im oder kleiner als der Nanometerbereich vor. Die erfindungsgemäßen Komplexverbindungen liegen weiter bevorzugt homogen verteilt in dem hydrophilen Polymer vor.

Die so erfindungsgemäße antimikrobielle Zusammensetzung kann in eine bestimmte gewünschte Form gebracht werden. Bevorzugt handelt es sich bei dieser Form um eine Form, bei der das Verhältnis der Oberfläche zu dem Volumen und/oder der Masse der antimikrobiellen Zusammensetzung optimiert wird. Hierdurch kann vorteilhafterweise das Volumen, welches durch die antimikrobielle Zusammensetzung im Inneren des Behälters vereinnahmt wird, verringert werden.

Auf bevorzugte dieser Formen wird weiter unten detaillierter eingegangen, wobei bereits an dieser Stelle erwähnt werden soll, dass die erfindungsgemäße antimikrobielle Zusammensetzung vorzugsweise und - unter anderem - in folgenden Formen vorliegen kann: Granulat, Platten, Spinnmatte, Vlies, geschäumtes Polymer, filterähnliches Gewirk.

Die Menge der Metallionen, die für die verlässliche antimikrobielle Behandlung der Betriebsflüssigkeit erforderlich ist, hängt von verschiedenen Parametern ab, insbesondere der Menge der zu behandelnden Betriebsflüssigkeit (bzw. dem Volumen des Behälters) und der Oberfläche der antimikrobiellen Zusammensetzung.

Beispielsweise und bevorzugt ist es bei einem 10.000 cm³ fassenden Behälter und bei einer Oberfläche von 900 cm² der antimikrobiellen Zusammensetzung vorteilhaft, wenn die antimikrobielle Zusammensetzung 10 Gew.-% der Komplexverbindung und 90 Gew.-% des hydrophilen Polymers (bevorzugt ein Polyamid) enthält und wobei die Komplexverbindung einen Metallanteil von 13 Gew.-% aufweist. Dementsprechend besteht in diesem Fall die erfindungsgemäße Komplexverbindung aus 87 Gew.-% des Organoliganden (bevorzugt ein Polyethylenimin oder ein Polyesterpolyol, das mittels einer n-Alkancarbonsäure amphiphil modifiziert wurde) und 13 Gew.-% des Metalls (bevorzugt Silber), bzw. die erfindungsgemäße antimikrobielle Zusammensetzung aus 90 Gew.-% hydrophilem Polymer, 8,7 Gew.-% Organoliganden und 1,3 Gew.-% Metall. Bei Vorliegen dieser Kombination kam es vorteilhafterweise zu einer Reduktion der Anzahl der in der Betriebsflüssigkeit enthaltenen Mikroorganismen um 100 % innerhalb einer Inkubationszeit von 14 Tagen.

Bevorzugt beträgt der Anteil der erfindungsgemäßen Komplexverbindung in der antimikrobiellen Zusammensetzung bei ≤ 15 Gew.- %, bevorzugter ≤ 13 Gew.-% und noch bevorzugter bei ≤ 11 Gew.- %. Eine bevorzugte Untergrenze sind hierbei ≥ 10 Gew.-% oder > 10 Gew.-% der erfindungsgemäßen Komplexverbindung in der antimikrobiellen Zusammensetzung. Ebenfalls bevorzugt liegt der Anteil der erfindungsgemäßen Komplexverbindung in der antimikrobiellen Zusammensetzung in einem Bereich von ≥ 7 Gew.- % und ≤ 15 Gew.-%, bevorzugter bei ≥ 9 Gew.-% und ≤ 15 Gew.-%, noch bevorzugter bei ≥ 10 Gew.-% und ≤ 13 Gew.-% und am bevorzugtesten bei ≥ 10 Gew.-% und ≤ 13 Gew.-% oder bei > 10 Gew.-% und ≤ 13 Gew.-%. Das hydrophile Polymer - zuzüglich etwaiger Zusatzstoffe wie Additive, Füllstoffe, Verarbeitungshilfsmittel, Farbpigmente oder Gleitmittel - ist in entsprechenden Anteilen enthalten, um 100 Gew.-% zu ergeben.

Bevorzugt liegt der Anteil des Metalls in der antimikrobiellen Zusammensetzung bei ≥ 0,6 Gew.-%, bevorzugter bei ≥ 0,8 Gew.-% und am bevorzugtesten bei ≥ 1,0 Gew.-% oder ≥ 1,3 Gew.-%. Eine bevorzugte Obergrenze sind hierbei ≤ 2,0 Gew.-% des Metalls in der antimikrobiellen Zusammensetzung. Ebenfalls bevorzugt liegt der Anteil des Metalls in dem erfindungsgemäßen Komplex in einem Bereich von ≥ 0,6 Gew.-% und ≤ 2,0 Gew.-%, bevorzugter in einem Bereich von ≥ 0,8 Gew.-% und ≤ 1,5 Gew.-%, noch bevorzugter in einem Bereich von ≥ 0,9 Gew.-% und ≤ 1,4 Gew.-% und am bevorzugtesten in einem Bereich von ≥ 1,1 Gew.-% und ≤ 1,4 Gew.-%. Eine antimikrobielle Zusammensetzung mit einem Anteil des Metalls von 1,3 Gew.-%, insbesondere mit 1,3 Gew.-% Ag, ist am bevorzugtesten.

Wie sich herausstellte, stehen die mechanischen Eigenschaften der erfindungsgemäßen Polymer-Komplexverbindungs-Mischung in direkter Abhängigkeit zu dem Anteil des Metalls in dieser Mischung. Insbesondere zeigte sich, dass die mechanischen Eigenschaften negativ beeinflusst werden, wenn der Anteil des Metalls einen gewissen Wert überschreitet. Dieser Wert lag in einzelnen Versuchen bei etwa 0,6 Gew.-% des Metalls. Das Überschreiten dieses Wertes führte dazu, dass die erfindungsgemäße antimikrobielle Zusammensetzung bei auf sie wirkenden Kräften zu Verformungen neigte bzw. mechanisch weniger belastbar wurde. Dementsprechend ist die antimikrobielle Zusammensetzung bevorzugt als ein nichttragendes Element des Behälters ausgeführt. Wird die antimikrobielle Zusammensetzung als nichttragendes Element des Behälters im Innenraum des Behälters angeordnet, so kann der Anteil des Metalls in der Zusammensetzung vorteilhafterweise erhöht werden ohne, dass es zu strukturellen Problemen des Behälters kommt, wie z.B. Verformungen.

Bevorzugt ist das Verhältnis der Oberfläche der im Innenraum des Behälters angeordneten antimikrobiellen Zusammensetzung zu dem Volumen des Innenraums des Behälters ≥ 0,06 oder ≥ 0,15. Weiter bevorzugt liegt das Verhältnis der Oberfläche der im Innenraum des Behälters angeordneten antimikrobiellen Zusammensetzung zu dem Volumen des Innenraums des Behälters in einem Bereich von ≥ 0,06 und ≤ 0,15 oder ≥ 0,06 und ≤ 0,12, noch bevorzugt in einem Bereich von ≥ 0,08 und ≤ 0,10 und am bevorzugtesten in bei 0,09.

Die erfindungsgemäße antimikrobielle Zusammensetzung kann generell an jeder geeigneten Position im Innenraum des Behälters angeordnet werden, die mit der aufzunehmenden Betriebsflüssigkeit in Kontakt kommen kann. Hierbei wird die antimikrobielle Zusammensetzung bevorzugt direkt oder indirekt mit der Innenwandung, d.h. der inneren Oberfläche, des Behälters verbunden. Diese Verbindung ist weiter bevorzugt eine lösbare Verbindung.

Bevorzugt ist die antimikrobielle Zusammensetzung zumindest abschnittsweise an der inneren Oberfläche der Wandung des Behälters angeordnet, die den Innenraum umschließt. Besonders bevorzugt ist die erfindungsgemäße Zusammensetzung hierbei als eine Schicht auf der inneren Oberfläche der Wandung des Behälters angeordnet. Diese Schicht kleidet damit den Innenraum des Behälters zumindest abschnittsweise aus. Die Schicht kann auf die Innenwandung aufgetragen werden oder bei der Herstellung des Behälters als Teil der Behälterwandung hergestellt werden.

Die antimikrobielle Zusammensetzung kann alternativ oder zusätzlich ebenfalls als eine Schicht um ein im Innenraum des Behälters angeordnetes Einbauteil ausgeführt sein, die das Einbauteil zumindest abschnittsweise umgibt. Bevorzugte solcher Einbauteile sind ausgewählt aus der Gruppe bestehend aus einem Schwallelement, einem Schwalltopf, einer Schwallplatte, einer Heizfolie und einem PTC-Heizpolymer.

Die Schicht aus der erfindungsgemäßen Zusammensetzung wird bevorzugt durch nachträgliches Aufbringen auf und/oder einstückige Formung mit der Behälterwandung und/oder dem Einbauteil auf diese aufgebracht. Besonders bevorzugt wird die Schicht im 2-Komponenten Verfahren (2K-Verfahren) oder in einem Coextrusionsverfahren auf die innere Oberfläche der Behälterwandung und/oder das Einbauteil aufgebracht.

Ganz besonders bevorzugt ist die innere Oberfläche der Wandung des Behälters im Wesentlichen vollständig mit der Schicht aus der erfindungsgemäßen Zusammensetzung ausgekleidet.

Weiter bevorzugt kann für den Fall, dass es sich bei dem Einbauteil um ein nichttragendes Einbauteil des Behälters handelt, dieses Einbauteil aus der erfindungsgemäßen Zusammensetzung hergestellt sein. Bevorzugte Beispiele für solche nichttragenden Einbauteile sind ausgewählt aus der Gruppe bestehend aus einem Schwallelement, einem Schwalltopf, einer Platte, insbesondere einer Schwallplatte, einer aus der Zusammensetzung gesponnenen Matte (Spinnmatte), ein die Zusammensetzung enthaltendes filterähnliches Gewirk und ein aus der Zusammensetzung hergestellter Schaum. In einer besonders bevorzugten Ausführungsform, die weiter unten näher beschrieben wird, handelt es sich bei dem Einbauteil um ein Teilvolumen des Behälterinnenraums, am bevorzugtesten um einen Käfig oder um ein Netz, insbesondere ein Textilnetz.

In einer weiteren bevorzugten Ausführungsform ist die antimikrobielle Zusammensetzung, bzw. das Einbauteil plattenförmig ausgestaltet. Dies hat den besonderen Vorteil, dass eine solche Platte vorzugsweise als Schwallelement dienen kann. Die Platte wird weiter vorzugsweise im Spritzgussverfahren hergestellt und kann noch weiter bevorzugt Perforationen aufweisen, die einen Durchtritt der Betriebsflüssigkeit erlauben.

Ebenfalls bevorzugt kann die erfindungsgemäße Zusammensetzung in Form eines Granulats vorliegen, welches in den Behälter eingefüllt wird. Dies hat unter anderem den Vorteil, dass die Oberfläche der in den Behälter eingebrachten Zusammensetzung vergrößert wird. Hierdurch können zum einen die Metallionen schneller in die Betriebsflüssigkeit diffundieren, d.h. eine schnellere Wirksamkeit wird erreicht. Zum anderen wird das Nutzvolumen des Behälters weniger durch die eingebrachte erfindungsgemäße Zusammensetzung verringert.

Noch weiter bevorzugt ist die antimikrobielle Zusammensetzung - hierbei ganz besonders bevorzugt das Granulat - innerhalb eines Teilvolumens des Behälters angeordnet, der mit dem Innenraum des Behälters in Fluidverbindung steht. Somit ist das Teilvolumen von der im Innenraum des Behälters befindlichen Betriebsflüssigkeit durchströmbar. Die Begrenzung des Teilvolumens ist hingegen nicht durchlässig für das die erfindungsgemäße Zusammensetzung. Dies hat den Vorteil, dass die erfindungsgemäße Zusammensetzung innerhalb des Behälters gesammelt vorgehalten wird und beispielsweise aufgrund ihres geringen Durchmessers nicht über eine Entnahmeöffnung des Behälters entnommen werden kann.

Weiter bevorzugt kann das Teilvolumen mit dem Behälter lösbar oder unlösbar verbunden sein oder nicht verbunden sein. Noch bevorzugter kann das Teilvolumen lösbar mit dem Behälter verbunden sein. Dies hat den Vorteil, dass das Granulat an einer definierten Stelle in dem Behälter angeordnet werden kann, bzw. fixiert werden kann und weiterhin leichter austauschbar ist.

Das Teilvolumen kann auf jegliche geeignete Art gebildet werden. In besonders bevorzugten Ausführungsformen wird das Teilvolumen gebildet durch eine Gitterkugel, ein Netz oder einen Käfig. Ganz besonders bevorzugt weist der Käfig seinerseits ebenfalls die antimikrobielle Zusammensetzung auf oder ist aus dieser hergestellt. Umgekehrt kann der Käfig auch aus einem beliebigen geeigneten anderen Material hergestellt sein. Bevorzugt handelt es sich bei diesem Material um ein Material, welches sich leicht mit der Innenwandung des Behälters unlösbar verbinden lässt.

Sowohl das in dem Behälter angeordnete Einbauteil als auch das Teilvolumen kann bevorzugt mit dem Behälter lösbar oder unlösbar verbunden sein. In beiden Fällen ist vorteilhafter Weise die genaue und dauerhafte Positionierung der antimikrobiellen Zusammensetzung möglich, sodass beispielsweise das Raumangebot im Inneren des Behälters optimal ausgenutzt werden kann. Eine lösbare Verbindung wird aus den oben genannten Gründen besonders bevorzugt.

Die Verbindung des Einbauteils oder des Teilvolumens mit dem Behälter kann auf jegliche geeignete Art und Weise geschehen.

Im Falle von unlösbaren Verbindung sind insbesondere ein Verschweißen und/oder ein Verkleben bevorzugt. Ein Verschweißen bietet sich insbesondere dann an, wenn beide zu verschweißende Komponenten aus einem Kunststoff hergestellt sind. Dies ist insbesondere dann gegeben, wenn die Innenwand des Behälters eine Schicht aus der erfindungsgemäßen Zusammensetzung aufweist und die damit zu verschweißende Komponente ebenfalls die erfindungsgemäße Zusammensetzung als Schicht aufweist oder gar aus dieser besteht.

Im Falle von lösbaren Verbindungen werden insbesondere lösbare mechanische Verbindungen, die auf einem kraft- und/oder formschlüssig beruhen bevorzugt. Ganz besonders bevorzugt wird die Verbindung über einen Schwalbenschwanz sowie eine Rastnase oder über eine Clip-Verbindung. Insbesondere letztere ist besonders vorteilhaft für die Verwendung im Spritzguss. Sie ist weiterhin einfach zu positionieren und montieren und eine akustische Kontrolle der Montage ist möglich. Das im Behälter angeordnete Einbauteil und/oder das Teilvolumen weisen bevorzugt einen Schwalbenschwanz und/oder eine Rastnase auf. Ebenfalls bevorzugt weisen das im Behälter angeordnete Einbauteil und/oder das Teilvolumen bevorzugt eine Clip-Verbindungs-Einrichtung auf.

Weiter bevorzugt wird die antimikrobielle Zusammensetzung zumindest teilweise im Bodenbereich des Behälters angeordnet. Dies hat den weiteren Vorteil, dass die erfindungsgemäße Zusammensetzung auch dann von der Betriebsflüssigkeit kontaktiert werden kann, wenn der Behälter nicht vollständig mit dieser gefüllt ist. Unter dem Begriff Bodenbereich wird vorzugsweise die untere Hälfte, bevorzugter das untere Drittel, des Volumens des Behälters verstanden, in welchem sich die Betriebsflüssigkeit sammelt, wenn sich der Behälter in Einbaulage befindet, d. h. beispielsweise in ein Kraftfahrzeug montiert wurde, oder auf dem Boden steht. Ganz besonders bevorzugt ist das Einbauteil und/oder das Teilvolumen mit der Innenseite des Bodens des Behälters verbunden oder liegt auf diesem auf. Besteht die antimikrobielle Zusammensetzung aus Granulat, so hat diese bevorzugt eine Dichte die größer als die Dichte der Betriebsflüssigkeit ist und sinkt damit ebenfalls auf den Boden des Behälters, d. h das Granulat liegt auf dem Boden des Behälters auf. Besonders bevorzugt ist die Dichte der antimikrobiellen Zusammensetzung >1 (bei 20 °C und Normdruck).

Wie zuvor beschrieben liegt in einer bevorzugten Ausführungsform die antimikrobielle Zusammensetzung in Form eines Granulats vor und ist innerhalb eines als Teilvolumen ausgebildeten, bevorzugt nichttragenden, Einbauteils im Innenraum des Behälters angeordnet. Das Teilvolumen - und damit auch das Granulat - steht mit dem Innenraum des Behälters in Fluidverbindung. Bei diesem Teilvolumen handelt es sich wie ebenfalls bereits ausgeführt, weiter bevorzugt um einen Käfig oder ein Netz. Dementsprechend wird sichergestellt, dass die im Behälter befindliche Betriebsflüssigkeit mit dem im Teilvolumen befindlichen Granulat in Kontakt treten und antimikrobiell behandelt werden kann, während das Granulat innerhalb des Teilvolumens gesammelt bleibt. Ebenfalls bevorzugt weist das Teilvolumen, noch bevorzugter der Käfig oder das Netz, eine Öffnung auf, die innerhalb der verschließbaren Öffnung anordenbar ist. Dies ist besonders dann von Vorteil, wenn es sich bei der verschließbaren Öffnung um eine Befüllöffnung des Behälters handelt. Eingefülltes Volumen kann dann durch die Befüllöffnung und weiter durch die Öffnung des Teilvolumens in das Teilvolumen strömen und nach antimikrobieller Behandlung in den Behälterinnenraum abgegeben werden.

Eine bevorzugte Ausführungsform betrifft einen Behälter, wobei die antimikrobielle Zusammensetzung innerhalb eines Teilvolumens des Behälters angeordnet ist, das mit dem Innenraum des Behälters in Fluidverbindung steht. Die antimikrobielle Zusammensetzung liegt weiterhin in Form eines Granulats vor und das Teilvolumen ist mittels einer Befestigungseinrichtung, die eine verschließbare Öffnung in der Behälterwand - bevorzugt in der Behälteroberschale oder der Behälterunterschale - aufweist, reversibel an dem Behälter befestigt und im Innenraum des Behälters angeordnet.

Mit anderen Worten ist die verschließbare Öffnung in der Behälterwand Bestandteil der Befestigungseinrichtung. Die Befestigungseinrichtung dient zur Befestigung und/oder Anordnung des Teilvolumens bzw. das Teilvolumen ist reversibel mittels der Befestigungseinrichtung mit dem Behälter verbunden. Innerhalb des Teilvolumens ist die antimikrobielle Zusammensetzung in Form eines Granulats angeordnet. Das Teilvolumen ist derart ausgestaltet, dass es eine Fluidverbindung des in ihm angeordneten Granulats mit der im Behälter befindlichen Betriebsflüssigkeit ermöglicht. Hierzu ist das Teilvolumen bevorzugt als Käfig oder Netz ausgebildet. Eine effiziente antimikrobielle Behandlung der Betriebsflüssigkeit wird somit ermöglicht.

Unter einer reversiblen Verbindung des Teilvolumens mittels einer Befestigungseinrichtung an die verschließbare Öffnung in der Wandung des Behälters ist eine lösbare Verbindung, bevorzugt eine zerstörungsfrei lösbare Verbindung zu verstehen. Hierunter fallen im Wesentlichen alle Verbindungsarten, die nicht den stoffschlüssigen Verbindungsarten (insbesondere Schweißen und/oder Kleben) zuzuordnen sind oder zumindest eine solche stoffschlüssige Verbindungsart aufweisen. Besonders bevorzugt handelt es sich bei der reversiblen Verbindung um eine formschlüssige und/oder kraftschlüssige Verbindung, weiter bevorzugt um eine ausschließlich formschlüssige und/oder kraftschlüssige Verbindung. Grundgedanke der erfindungsgemäßen reversiblen Verbindung ist die Ermöglichung der verbesserten Wartungsfähigkeit des Behälters. Eine reversible Verbindung des Teilvolumens mit dem Behälter bringt diesbezüglich mehrere Vorteile mit sich.

So kann aufgrund der reversiblen Verbindung zunächst auf ein aufwendiges, fehleranfälliges und kostspieliges Verschweißen und/oder Verkleben des Teilvolumens mit dem Behälter verzichtet werden. Weiterhin lässt sich das Teilvolumen leicht, kostengünstig und ohne das Risiko, den Behälter zu beschädigen und damit vollständig austauschen zu müssen, austauschen. Hierdurch kann verbrauchte antimikrobielle Zusammensetzung deutlich einfacher ersetzt werden, als dies bei einer Verschweißung und/oder Verklebung der Fall wäre. Ein Austausch des Teilvolumens kann weiterhin bevorzugt von der Außenseite des Behälters her erfolgen. Befindet sich die verschließbare Öffnung nach einer bevorzugten Ausführungsform an einer Behälterunterschale, an der Behälterunterseite, am Behälterboden und/oder einer Seitenwand des Behälters so kann der Austausch vorteilhafter Weise ohne einen vorherigen Ausbau des Behälters, z.B. aus einem KFZ, erfolgen.

Bei der verschließbaren Öffnung in der Behälterwand kann es sich um eine beliebige verschließbare Öffnung des Behälters handeln. Unter einer solchen Öffnung soll verstanden werden, dass diese die Behälterwand durchdringt. Mit anderen Worten stellt die verschließbare Öffnung in der Behälterwand einen Kanal durch die Behälterwand dar. Dieser Kanal ermöglicht einen Fluidausgleich zwischen Innenraum des Behälters und die den Behälter umgebende Umgebung. Bei dem Fluid handelt es sich weiter bevorzugt um ein Gas.

Bevorzugt dient die verschließbare Öffnung der Herstellung einer Fluidverbindung zwischen dem Innenraum des Behälters und der Umgebung des Behälters. Noch weiter bevorzugt handelt es sich bei der verschließbaren Öffnung um eine Öffnung, die neben ihrer Funktion als Bestandteil der Befestigungseinrichtung zumindest eine weitere Funktion für den bestimmungsgemäßen Einsatz ausführt. Ganz besonders bevorzugt handelt es sich bei der verschließbaren Öffnung um eine Be- und/oder Entlüftungsöffnung des Betriebsbehälters. Ebenfalls besonders bevorzugt handelt es sich bei der verschließbaren Öffnung um eine Befüllöffnung des Betriebsbehälters

Die verschließbare Öffnung ist Bestandteil der Befestigungseinrichtung zur reversiblen Befestigung des Teilvolumens an den Behälter. Hierunter soll verstanden werden, dass die Befestigungseinrichtung sich den durch die Behälterwand erstreckenden Kanal zu Nutze macht. Besonders bevorzugt dient hierbei der Randbereich, d.h. das Wandmaterial, welches in der Nähe der Öffnung angeordnet ist, bzw. die Öffnung/den Kanal umschließt oder definiert, als Befestigungspunkt.

Die erfindungsgemäße Verwendung der verschließbaren Öffnung des Behälters als Bestandteil der Befestigungseinrichtung weist zahlreiche Vorteile auf. So wird zunächst eine in der Wandung des Behälters ohnehin erforderliche Öffnung, die bevorzugt zur Be- und/oder Entlüftung, zur Befüllung des Betriebsflüssigkeitsbehälters und/oder zur Aufnahme eines Ventils dient, zu einem weiteren Zweck, nämlich der Befestigung des Teilvolumens im Innenraum des Behälters verwendet. Hierdurch kann zum einen ein Anschweißen und/oder Ankleben des Teilvolumens an die Innenwand des Behälters entfallen. Zusätzlich wird der Vorteil erreicht, dass ein Teil der Befestigungseinrichtung bereits mit der Herstellung des Behälters erzeugt werden kann. Weiterhin kann mit einfachen Mitteln eine reversible Verbindung zwischen dem Teilvolumen und dem Behälter realisiert werden, was einen deutlich erleichterten Austausch des Teilvolumens ermöglicht. Dies ist insbesondere dann von Vorteil, wenn es sich bei der Öffnung um eine Öffnung für die Be- und/oder Entlüftung oder eine Befüllöffnung handelt, die dann zusätzlich zu ihrer Funktion als Druckausgleichsmittel, bzw. Befüllmittel eine Kontamination der Betriebsflüssigkeit durch Mikroorganismen vermeidet.

Ebenfalls kann in bevorzugter und vorteilhafter Weise die verschließbare Öffnung in der Wandung des Behälters durch die Befestigung des Teilvolumens mittels der Befestigungseinrichtung verschlossen werden. Erneut entfallen hierdurch weitere/zusätzliche Prozessschritte, die unter anderem ein Verschweißen und/oder Verkleben der Öffnung erfordern würden.

Weiter bevorzugt weist die verschließbare Öffnung in der Behälterwand eine Einkragung der Behälterwand in den Innenraum des Behälters und/oder eine Auskragung auf.

Bei der Einkragung bzw. der Auskragung der Behälterwand handelt es sich um eine strukturelle Ausgestaltung der Behälterwand, bei der Wandmaterial aus der Ebene der Behälterwand in Richtung des Behälterinnenraums (Einkragung) oder in Richtung der Umgebung des Behälters (Auskragung) gerichtet vorliegt. Mit anderen Worten wird durch eine Einkragung und/oder eine Auskragung die durch das Wandmaterial gebildete Mantelfläche des die Behälterwand durchdringenden Kanals vergrößert. Vorteilhafterweise kann hierdurch eine verbesserte, insbesondere formschlüssige und/oder kraftschlüssige, Befestigung des Teilvolumens mittels der Befestigungseinrichtung erreicht werden. Dies gilt bevorzugt insbesondere dann, wenn im Bereich der Einkragung und/oder Auskragung ein Verbindungsmittel zur formschlüssigen und/oder kraftschlüssigen Befestigung vorgesehen ist. Bevorzugt handelt es sich bei diesem Mittel um ein Gewinde, ein Mittel für eine Schraubverbindung, ein Mittel für eine Pass-Sitz-Verbindung, ein Mittel für eine Press-Passungs-Verbindung, ein Mittel für eine Bajonettverbindung oder ein Mittel für eine Clip-Verbindung.

Weiter bevorzugt ist die Einkragung und/oder die Auskragung einstückig mit der Behälterwand hergestellt. Dies bietet den zusätzlichen Vorteil, dass ein weiterer Teil der Befestigungseinrichtung bereits mit der Herstellung der Behälterwand bzw. des Behälters erzeugt werden kann.

Ebenfalls bevorzugt weist der Behälter einen von der Außenseite des Behälters her in die verschließbare Öffnung des Behälters einsetzbaren Verschluss auf. Der Verschluss ermöglicht weiter bevorzugt ein fluiddichtes Verschließen der verschließbaren Öffnung. Noch bevorzugter ist zusätzlich das Teilvolumen vom Innenraum des Behälters her in die verschließbare Öffnung einsetzbar. Noch weiter bevorzugt ist der Verschluss Bestandteil der Befestigungseinrichtung. Dies hat unter anderem den Vorteil, dass die verschließbare Öffnung bei Befestigung des Teilvolumens einfach und sicher verschlossen wird.

Weiter bevorzugt ist der Verschluss in die verschließbare Öffnung des Behälters eingesetzt und kraftschlüssig und/oder formschlüssig befestigt. Noch weiter bevorzugt ist das Teilvolumen in die verschließbare Öffnung eingesetzt und dort kraftschlüssig und/oder formschlüssig befestigt. Hierdurch wird die verschließbare Öffnung sowohl von der Außenseite des Behälters her durch zumindest den Verschluss verschlossen, als auch das Teilvolumen sicher innerhalb des Behälters angeordnet.

Der Verschluss weist bevorzugt eine Außenwandung und eine Innenwandung auf und kontaktiert, weiter bevorzugt, mit seiner Außenwandung, die Einkragung und/oder die Auskragung in der Behälterwandung. Hierdurch kann eine besonders sichere formschlüssige und/oder kraftschlüssige Befestigung erreicht werden.

Noch weiter bevorzugt verringert sich die lichte Weite der Einkragung und/oder der Auskragung in Richtung des Innenraums des Behälters. Hierdurch kann insbesondere eine verlässlichere Befestigung zwischen Verschluss und/oder Teilvolumen mit der verschließbaren Öffnung erreicht werden.

Wie bereits zuvor ausgeführt, kann die formschlüssige und/oder kraftschlüssige Befestigung des Verschlusses bevorzugt über Verbindungsmittel hergestellt werden, die an der Öffnung, besonders bevorzugt an der Einkragung und/oder der Auskragung, angeordnet sind. Ebenfalls bevorzugt kann die formschlüssige und/oder kraftschlüssige Befestigung des Verschlusses über Verbindungsmittel hergestellt werden, die an dem Verschluss, besonders bevorzugt der Außenwandung des Verschlusses, angeordnet sind. In einer ganz besonderen Ausführungsform sind diese Verbindungsmittel sowohl an der Öffnung, insbesondere an der Einkragung und/oder der Auskragung, als auch an dem Verschluss angeordnet und wirken zusammen.

Das Teilvolumen weist bevorzugt eine Außenwandung und eine Innenwandung auf und kontaktiert, weiter bevorzugt, mit seiner Außenwandung, die Einkragung und/oder die Auskragung in der Behälterwandung. Hierdurch kann eine besonders sichere formschlüssige und/oder kraftschlüssige Befestigung erreicht werden.

Weiter bevorzugt kann die formschlüssige und/oder kraftschlüssige Befestigung des Teilvolumens über Verbindungsmittel hergestellt werden, die an der Behälterwand, besonders bevorzugt an der Einkragung und/oder der Auskragung, angeordnet sind. Ebenfalls bevorzugt kann die formschlüssige und/oder kraftschlüssige Befestigung des Teilvolumens über Verbindungsmittel hergestellt werden, die an dem Teilvolumen, besonders bevorzugt der Außenwandung des Teilvolumens, angeordnet sind. In einer ganz besonderen Ausführungsform sind diese Verbindungsmittel sowohl an der Behälterwand, insbesondere an der Einkragung und/oder der Auskragung, als auch an dem Teilvolumen angeordnet und wirken zusammen.

Ebenfalls bevorzugt kann die formschlüssige und/oder kraftschlüssige Befestigung des Verschlusses und/oder des Teilvolumens über Verbindungsmittel hergestellt werden, die an dem Verschluss und/oder dem Teilvolumen angeordnet sind. In einer ganz bevorzugten Ausführungsform ist ein Verbindungsmittel an der Innenwandung des Verschlusses angeordnet und ein Verbindungsmittel an der Außenwandung des Teilvolumens und die beiden Verbindungsmittel wirken zusammen. Der Verschluss kontaktiert weiterhin mit seiner Außenwandung die verschließbare Öffnung, insbesondere eine Einkragung derselben. Hierdurch wird, insbesondere bei einer Pass-Sitz-Verbindung oder einer Press-Passungsverbindung, eine besonders sichere Verbindung gewährleistet.

Die Verbindungsmittel zur Herstellung einer formschlüssigen und/oder kraftschlüssigen Befestigung können an der verschließbaren Öffnung und/oder am Verschluss und/oder am Teilvolumen angeordnet sein. Die Öffnung kann Verbindungsmittel zur Verbindung mit dem Verschluss und/oder dem Teilvolumen aufweisen. Der Verschluss kann Verbindungsmittel zur Verbindung mit der Öffnung und/oder dem Teilvolumen aufweisen und an der Öffnung und/oder dem Teilvolumen befestigt sein. Das Teilvolumen kann Verbindungsmittel zur Verbindung mit der Öffnung und/oder dem Verschluss aufweisen und an der Öffnung und/oder dem Verschluss befestigt sein. Besonders bevorzugt ist ein Verbindungsmittel an der Außenwandung und/oder Innenwandung des Verschlusses angeordnet. Ebenfalls besonders bevorzugt ist ein Verbindungsmittel an der Außenseite des Teilvolumens angeordnet. Erneut wird herausgestellt, dass bevorzugt sämtliche der so erzeugten Verbindungen reversible Verbindungen sind, wodurch eine einfache Wartbarkeit des Behälters gewährleistet wird.

Besonders bevorzugte Beispiele für solche, insbesondere zusammenwirkende, Verbindungsmittel schließen Gewinde, Mittel für eine Schraubverbindung, Mittel für eine Pass-Sitz-Verbindung, Mittel für eine Press-Passungs-Verbindung, Mittel für eine Bajonettverbindung oder Mittel für eine Clip-Verbindung ein.

In einer weiteren bevorzugten Ausführungsform ist zwischen dem in die Öffnung eingesetzten Verschluss und der Behälterwand zusätzlich eine Muffe, insbesondere eine Kunststoff- oder Gummimuffe, angeordnet. Besonders bevorzugt ist diese Muffe zwischen der Außenwandung des Verschlusses und der Einkragung und/oder der Auskragung angeordnet. Hierdurch wird eine besonders sichere und gleichzeitig fluiddichte Befestigung des Verschlusses in der verschließbaren Öffnung gewährleistet. Bei Vorhandensein einer solchen Muffe kontaktiert der Verschluss die Öffnung mittelbar über die Muffe.

In einer weiteren bevorzugten Ausführungsform ist das Teilvolumen oder ein mit einem Verschluss verbindbares Teilvolumen von der Außenseite des Behälters her in die verschließbare Öffnung des Behälters einsetzbar und das eingesetzte Teilvolumen oder der mit dem Teilvolumen verbindbare Verschluss ist geeignet die verschließbare Öffnung zu verschließen. Besonders bevorzugt kann die verschließbare Öffnung hierbei fluiddicht durch den Verschluss verschlossen werden.

Erneut wird hierdurch der Vorteil erzielt, dass eine ohnehin in der Behälterwandung befindliche Öffnung zur reversiblen Befestigung und Positionierung der antimikrobiellen Zusammensetzung genutzt wird. Erneut wird durch diese Anordnung ebenfalls eine leichte Wartbarkeit des Behälters, bzw. ein einfacher, sicherer und kostengünstiger Austausch der verbrauchten antimikrobiellen Zusammensetzung gewährleistet. Dies gilt insbesondere für eine Wartbarkeit von der Außenseite des Behälters her.

Besonders bevorzugt ist das von der Außenseite des Behälters her in die verschließbare Öffnung des Behälters einsetzbare Teilvolumen einstückig mit dem Verschluss hergestellt, der zum Verschließen der verschließbaren Öffnung geeignet ist.

Besonders bevorzugt wird das Teilvolumen hierbei in Einbaulage des Behälters von unten und von der Außenseite des Behälters her in diesen eingesetzt. Dies bietet den weiteren Vorteil, dass ein Ausbau des Behälters nicht erforderlich ist und weiterhin die antimikrobielle Zusammensetzung so positioniert ist, dass sie zuverlässig von der Betriebsflüssigkeit umspült werden kann.

Weiter bevorzugt ist das Teilvolumen oder ein mit einem Verschluss verbindbares Teilvolumen in die verschließbare Öffnung des Behälters eingesetzt und dort kraftschlüssig und/oder formschlüssig befestigt und das eingesetzte Teilvolumen oder der mit dem Teilvolumen verbundene Verschluss verschließt die verschließbare Öffnung. Die verschließbare Öffnung wird hierbei weiter bevorzugt fluiddicht verschlossen.

Wie bereits zuvor beschrieben, weisen Teilvolumen, Öffnung und/oder Verschluss bevorzugt Verbindungsmittel zur Herstellung der formschlüssigen und/oder kraftschlüssigen Befestigung auf, die noch bevorzugter zusammenwirken können. Für den Fall, dass Verschluss und Teilvolumen über ein oder mehrere an einem oder beiden der Elemente angeordnete Verbindungsmittel zusammenwirken kann auch davon gesprochen werden, dass der Verschluss ebenfalls Bestandteil der Befestigungseinrichtung für die reversible Befestigung des Teilvolumens an dem Behälter ist.

Besonders bevorzugte Beispiele für solche, insbesondere zusammenwirkende, Verbindungsmittel schließen Gewinde, Mittel für eine Schraubverbindung, Mittel für eine Pass-Sitz-Verbindung, Mittel für eine Press-Passungs-Verbindung, Mittel für eine Bajonettverbindung oder Mittel für eine Clip-Verbindung ein.

Weiter bevorzugt sind Behälter, Teilvolumen und/oder Verschluss aus Kunststoff hergestellt, wobei insbesondere eine Herstellung im Spritzgussverfahren bevorzugt wird. Noch bevorzugter sind Behälter oder Behälterschalen aus Kunststoff im Spritzgussverfahren hergestellt. Ebenfalls besonders bevorzugt sind Teilvolumen und Verschluss aus Kunststoff im Spritzgussverfahren hergestellt.

Wie bereits zuvor beschrieben, ist das Teilvolumen bevorzugt als Käfig oder Netz ausgeführt. Dies hat den Vorteil, dass die im Behälter befindliche Flüssigkeit zuverlässig mit der antimikrobiellen Zusammensetzung, die innerhalb des Teilvolumens angeordnet ist, in Kontakt gebracht werden kann. Gleichzeitig wird hierbei wirkungsvoll vermieden, dass die als Granulat vorliegende antimikrobielle Zusammensetzung aus dem Teilvolumen austreten kann. Hierdurch wird erneut eine verbesserte Wartbarkeit des Behälters, insbesondere ein erleichterter und vollständiger Austausch von verbrauchter antimikrobielle Zusammensetzung erreicht.

In einer besonders bevorzugten Ausführungsform ist der Käfig als spritzgegossenes Teil ausgeführt, wobei weiter bevorzugt der Käfig eine im Wesentlichen zylindrische bzw. röhrchenförmige Form aufweist. Weiter bevorzugt ist die Wand des Käfigs zumindest bereichsweise als Gitter ausgeführt. Dies ermöglicht einen einfachen Fluidaustausch vom Behälterinnenraum in das Innere des Käfigs, welches das Granulat enthält. Noch weiter bevorzugt ist der Durchmesser der Öffnungen des Gitters geringer als der Durchmesser des antimikrobiellen Granulats.

In einer weiteren besonders bevorzugten Ausführungsform ist das als Netz ausgeführte Teilvolumen ein Textilnetz. Solche Textilnetze sind kostengünstig, leicht verfügbar, sowie leicht zu entsorgen und weisen bevorzugt Öffnungen mit Durchmessern auf, die kleiner sind als der Durchmesser des antimikrobiellen Granulats. Das Textilnetz ist weiter bevorzugt in einen Kunststoffring eingespritzt, der als Verbindungsmittel im Sinne der Erfindung dient. Mit anderen Worten kann das Textilnetz über den Kunststoffring mit der verschließbaren Öffnung und/oder dem Verschluss verbunden werden.

In einer weiteren Ausführungsform weist der in die verschließbare Öffnung des Behälters einsetzbare Verschluss ein Ventil und/oder eine Membran auf, besonders bevorzugt eine semipermeable Membran. Dies ist insbesondere dann von Vorteil, wenn es sich bei der verschließbaren Öffnung um eine Be- und/oder Entlüftungsöffnung des Behälters handelt. In diesem Fall ist es weiter bevorzugt, dass der Verschluss einen Kanal aufweist, der eine Fluidverbindung des Behälterinnenraums mit der semipermeablen Membran herstellt.

Der Verschluss weist bevorzugt eine im Wesentlichen zylindrische Gestalt auf. Weiter bevorzugt wird die zur Außenseite des Behälters hin gerichtete Öffnung des Verschlusses mit zylindrischer Gestalt durch die semipermeable Membran verschlossen.

Unter dem Begriff semipermeabel Membran ist eine halbdurchlässige oder teilweise durchlässige Membran zu verstehen, die insbesondere durchlässig für Gase ist, während sie nicht durchlässig ist für Flüssigkeiten. Dementsprechend wirkt eine solche semipermeable Membran ähnlich wie ein Ventil und kann dazu verwendet werden, einen Gasaustausch des Behälters mit seiner Umgebung zu gewährleisten, während Flüssigkeiten nicht aus dem Behälter austreten oder in den Behälter eintreten können.

In einer weiteren Ausführungsform weist der in die verschließbare Öffnung des Behälters einsetzbare Verschluss einen Deckel auf, der einstückig oder, besonders bevorzugt, mit dem Verschluss verbindbar ausgestaltet sein kann. Insbesondere ein über eine kraft- und oder formschlüssige Verbindung mit dem Verschluss verbindbarer Deckel wird bevorzugt. Ganz besonders bevorzugt weißt der Deckel Verbindungsmittel zur Ausbildung einer Clipverbindung mit dem Verschluss auf.

In einer weiteren bevorzugten Ausführungsform weist der in die verschließbare Öffnung des Behälters einsetzbare Verschluss einen Anschluss für einen Schlauch, beispielsweise einen Nippel auf. Weiter bevorzugt ist an diesen Schlauchanschluss ein Schlauch angeschlossen. Hierdurch kann beispielsweise eine erhöhte Wattiefe des Fahrzeugs erreicht werden, in welches der erfindungsgemäße Behälter eingebaut wird. Ganz besonders bevorzugt ist der Anschluss für einen Schlauch Bestandteil des mit dem Verschluss verbindbaren Deckels.

Die verschiedenen Ausführungsformen der erfindungsgemäßen antibakteriellen Zusammensetzung sind frei miteinander kombinierbar, solange nicht offensichtliche Widersprüche bestehen. Beispielsweise kann eine beschichtete Innenwand des Behälters mit in einem Käfig angeordneten Granulat kombiniert werden, wobei der Käfig mit dem Behälterboden verbunden ist und wobei diese Verbindung über einen Schwalbenschwanz oder eine Clip-Verbindung des Käfigs lösbar ausgeführt ist.

Die vorliegende Erfindung betrifft ebenfalls ein Verfahren zur antimikrobiellen Bevorratung von Wasser oder wässrigen Lösungen unter Verwendung des zuvor beschriebenen Behälters. Das Verfahren weist vorzugsweise den Schritt des Einfüllens von Wasser oder einer wässrigen Lösung in den erfindungsgemäßen Behälter auf. Hierdurch kann die Anzahl der im Wasser oder der wässrigen Lösung enthaltenen Mikroorganismen wirksam reduziert werden.

Das erfindungsgemäße Verfahren kann weiter bevorzugt den Schritt der Entnahme und/oder des Austauschs des Wassers oder der wässrigen Lösung in dem Behälter aufweisen.

Ebenfalls bevorzugt weist das erfindungsgemäße Verfahren vor dem Entnahme- und/oder Austauschschritt einen Inkubationsschritt auf. Während des Inkubationsschritt wird das Wasser oder die wässrige Lösung weiter bevorzugt zumindest einen Tag, drei Tage, fünf Tage, eine Woche, zwei Wochen oder drei Wochen in dem Behälter bevorratet. Während dieser Inkubationszeit diffundieren die in der erfindungsgemäßen antimikrobiellen Zusammensetzung enthaltenen Metallionen in das Wasser oder die wässrige Lösung und reduzieren wirksam die Anzahl der dort anwesenden Mikroorganismen.

Die zuvor beschrieben einzelnen Ausführungsformen der Erfindung sind frei miteinander kombinierbar, solange nicht explizit etwas Gegenteiliges ausgeführt wurde, oder ein offensichtlicher Ausschluss entgegensteht.

Weitere Vorteile, Einzelheiten und Merkmale der Erfindung ergeben sich nachfolgend aus den erläuterten Ausführungsbeispielen. Dabei zeigen im Einzelnen:
- Figur 1:: einen schematischen Schnitt durch den erfindungsgemäßen Behälter, bei dem die antimikrobielle Zusammensetzung in Form von Einbauten, insbesondere Schwallwänden im Behälter angeordnet ist;
- Figur 2:: einen schematischen Schnitt durch den erfindungsgemäßen Behälter, bei dem die antimikrobielle Zusammensetzung als Granulat und innerhalb eines Teilvolumens in Form eines Käfigs im Inneren des Behälters angeordnet ist;
- Figur 3:: einen schematischen Schnitt durch den erfindungsgemäßen Behälter, bei dem die antimikrobielle Zusammensetzung als Granulat und innerhalb eines Teilvolumens in Form eines Netzes im Inneren des Behälters angeordnet ist. Weiterhin ist eine Schicht aus der antimikrobiellen Zusammensetzung auf die Innenwandung des Behälters aufgebracht;
- Figur 4:: eine schematische Übersicht über den Käfig aus Figur 2;
- Figur 5:: die Ergebnisse zweier Wirksamkeitsstudien unter Verwendung des erfindungsgemäßen Behälters;
- Fig. 6A:: einen schematischen Schnitt durch den erfindungsgemäßen Behälter, bei dem eine verschließbare Öffnung des Behälters zur Befestigung eines Teilvolumens genutzt wird, welches antimikrobielles Granulat enthält;
- Fig. 6B:: eine Vergrößerung des Bereichs der verschließbaren Öffnung nach Fig. 6A;
- Fig. 6C:: eine Vergrößerung des Bereichs der verschließbaren Öffnung nach einer weiteren Variante;
- Fig. 6D:: eine Vergrößerung des Bereichs der verschließbaren Öffnung nach einer weiteren Variante;
- Fig. 6E:: eine Vergrößerung des Bereichs der verschließbaren Öffnung nach einer weiteren Variante;
- Fig. 7A:: eine schematische Detailansicht des in die verschließbare Öffnung des Behälters einsetzbaren erfindungsgemäßen Verschlusses;
- Fig. 7B:: eine schematische Darstellung eines Deckels für den in die verschließbare Öffnung des Behälters einsetzbaren erfindungsgemäßen Verschluss;
- Fig. 8A:: eine schematische Darstellung eines von außen in die im Behälterboden des erfindungsgemäßen Behälters angeordnete verschließbare Öffnung eingesetzten und dort befestigten Teilvolumens in Form eines Textilnetzes;
- Fig. 8B:: eine schematische Darstellung eines von außen in die im Behälterboden des erfindungsgemäßen Behälters angeordnete verschließbare Öffnung eingesetzten und dort befestigten Teilvolumens in Form eines Käfigs;
- Fig. 9A:: eine schematische Darstellung eines von außen in die im Behälterboden des erfindungsgemäßen Behälters angeordnete verschließbare Öffnung eingeschraubtes Teilvolumens in Form eines Käfigs; sowie
- Fig. 9B:: eine Aufsicht auf den Verschluss des Teilvolumens.

In der folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

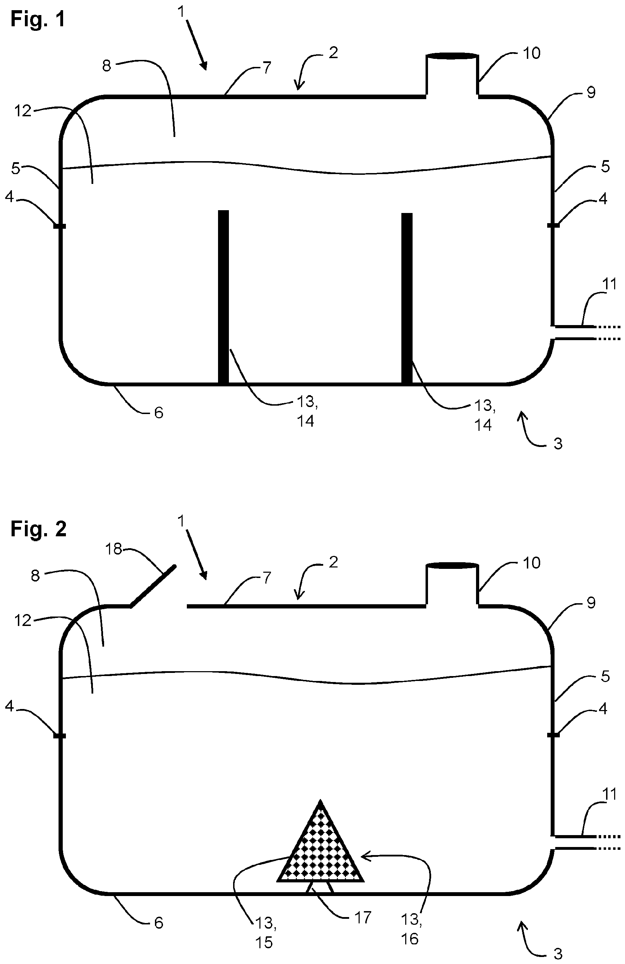

Figur 1 zeigt einen schematischen Schnitt durch den erfindungsgemäßen Behälter (1). Bei dem Behälter (1) handelt es sich um einen Betriebsflüssigkeitsbehälter für eine wässrige Reinigungslösung (12) zur Reinigung der Scheiben eines Kraftfahrzeugs.

Der Behälter (1) besteht aus einem Kunststoff (HDPE) ist aus zwei Halbschalen, der Oberschale (2) und der Unterschale (3) zusammengesetzt, wobei die beiden Halbschalen an der Schweißnaht (4) miteinander zu dem Behälter verbunden wurden. Die beiden Halbschalen wurden im Spritzgussverfahren hergestellt.

Der Behälter (1) hat eine im wesentlichen quaderförmige Gestalt und weist gegenüberliegende Seitenwände (5), sowie einen Behälterboden (6) und eine Behälterdecke (7) auf.

Behälter (1) bildet einen Hohlkörper aus, dessen Innenraum (8) durch die umlaufende Behälterwandung (9), genauer durch die innere Oberfläche dieser Wandung begrenzt wird. Das Volumen des Behälters (1), d. h. das Volumen des Innenraums (8) des Behälters (1) beträgt 10.000 cm³ bzw. 10 l.

Der Behälter (1) weist weiterhin eine verschließbare Befülleinrichtung (10) auf, die in der Behälterdecke (7), d. h. der Oberschale (2) angeordnet und in Form eines Einfüllstutzens ausgeführt ist. Ebenso weist der Behälter (1) eine Entnahmeeinrichtung (11) auf, die in der Seitenwand (4) im Bereich der Unterschale (3) angeordnet und in Form eines teilweise dargestellten Entnahmeschlauchs ausgeführt ist.

Der Behälter (1) ist weiterhin teilweise mit einer Betriebsflüssigkeit (12) gefüllt, die den Innenraum (8) des Behälters ausfüllt. Bei der Betriebsflüssigkeit (12) handelt es sich um eine wässrige Reinigungslösung für die Scheiben eines Kraftfahrzeugs. Die Betriebsflüssigkeit (12) wurde über den verschließbaren Einfüllstutzen (10) in den Betriebsflüssigkeitsbehälter (1) eingefüllt und kann bei Bedarf über den Schlauch (11) dem Betriebsflüssigkeitsbehälter (1) entnommen werden.

Innerhalb des Behälters (1), d. h. im Innenraum (8) des Behälters (1) angeordnet, sind zwei Einbauteile (14) in Form von zwei Schwallelemente (14), insbesondere zwei perforierte Schwallplatten zu erkennen, die aus der erfindungsgemäßen antimikrobiellen Zusammensetzung (13) bestehen. Hierdurch wird ein langanhaltender Depoteffekt erreicht, bei dem gewährleistet ist, dass die Metallionen aus der antimikrobiellen Zusammensetzung (13) in ausreichender Konzentration in der Betriebsflüssigkeit (12) vorhanden sind, um dort die Anzahl der Mikroorganismen wirkungsvoll zu reduzieren.

Beide Schwallplatten (14) sind im Bodenbereich des Behälters (1) angeordnet. Sie sind weiterhin im Wesentlichen senkrecht auf den Behälterboden (6) aufgesetzt und erstrecken sich in ihrer Längserstreckung in Richtung der Behälterdecke (7).

Die beiden Schwallplatten (14) wurden im Spritzgussverfahren aus der antimikrobiellen Zusammensetzung (13) hergestellt. Die Perforation der beiden Schwallplatten (14) ermöglicht es der Betriebsflüssigkeit (12) bei auf das Fahrzeug wirkenden Beschleunigungskräften durch die beiden Schwallplatten (14) hindurch zu treten, wobei dennoch eine Beruhigung von Schwallbewegungen erreicht wird.

Die beiden Schwallplatten (14) sind fest, d. h. unlösbar mit der Behälterwandung (9) verbunden. Hierbei wurden die beiden Schwallplatten (14) mit der inneren Oberfläche der Behälterunterschale (3) verschweißt, bevor die beiden Halbschalen (2,3) zu dem Behälter (1) verschweißt wurden.

Die Gesamtoberfläche der beiden Schwallplatten (14) beträgt ungefähr 900 cm². Die Dicke der beiden Schwallplatten (14) beträgt ungefähr 2mm. Das Schussgewicht der beiden Schwallplatten (14) beträgt zusammengenommen 180 g.

Die antimikrobielle Zusammensetzung besteht aus der erfindungsgemäßen Komplexverbindung aus einem mit einer n-Alkancarbonsäure amphiphil modifizierten Polyethylenimin (LUPASOL) und 1,3 Gew.-% Silber im 1:9-Verhältnis mit einem Co-Polyamid 6/66.

Figur 2 zeigt einen schematischen Schnitt durch einen erfindungsgemäßen Behälter (1), der dem Behälter (1) der Figur 1 im Wesentlichen entspricht.

Anstelle der Schwallplatten (14) der Figur 1 ist in dem Behälter (1) ein Teilvolumen (16) angeordnet. Das Teilvolumen (16) des Behälters (1) ist als Einbauteil, insbesondere als ein Käfig ausgebildet, der im Weiteren noch näher beschrieben werden wird.

Der Käfig (16) weist im Wesentlichen die Form eines dreiseitigen, geraden Prismas auf. Die Seitenflächen dieses Prismas sind perforiert, wobei die regelmäßig angeordneten Perforationsöffnungen einen Durchmesser von 2 mm aufweisen. Damit ist der Innenraum des Käfigs (16) mit dem Innenraum (8) des Behälters (1) fluidverbunden und die Betriebsflüssigkeit (12) kann aus dem Behälterinnenraum (8) in den Innenraum des Käfigs (16) sowie zurückströmen.

Der Käfig (16) ist lösbar mit der inneren Oberfläche der Behälterunterschale (6), bzw. dem Behälterboden (9) verbunden. Die lösbare Verbindung erfolgt hierbei über eine Verbindungseinrichtung (17), die aus einer Kombination eines Schwalbenschwanzes, der in eine entsprechende Aufnahme im Behälterboden (9) eingeführt wird und gegen ein Herausrutschen durch eine Rastnase (nicht dargestellt) abgesichert wird, besteht. Die lösbare Verbindung gewährleistet vorteilhafter Weise, dass der Käfig (16) beispielsweise durch eine weitere Öffnung (18), die auch als Revisionsklappe ausgeführt sein kann, in den Behälter (1) eingesetzt, bzw. entnommen oder ausgetauscht werden kann.

Der Käfig (16) wurde im Spritzgussverfahren aus HDPE hergestellt. In einer bevorzugten weiteren Ausführungsform wird er im Spritzgussverfahren aus der erfindungsgemäßen antimikrobiellen Zusammensetzung hergestellt. Der Käfig (16) ist faltbar, wobei die Seitenflächen über Filmscharniere miteinander verbunden sind und der gefaltete Käfig vorzugsweise über eine Clipverbindung (zum Beispiel über C-Clips) zusammengehalten wird. Die Wanddicke des Käfigs (16) beträgt ungefähr 2 mm.

Aufgrund der Faltbarkeit des Käfigs (16) kann in dessen Innenraum die erfindungsgemäße antimikrobielle Zusammensetzung (13,15) leicht eingebracht und/oder entnommen werden. Hierdurch wird vorteilhafter Weise ein Austausch von verbrauchter antimikrobieller Zusammensetzung vereinfacht. Weiterhin wird durch das Vorhandensein der Revisionsöffnung (18) dieser Austausch zusätzlich erleichtert, da die antimikrobielle Zusammensetzung nicht innerhalb des Behälters (1) getauscht werden muss. Ein weiterer Vorteil der Revisionsöffnung (18) ist es, dass das Teilvolumen (16) des Behälters (1) auch nach dem verschweißen zweier Halbschalen (2,3) leicht in den Behälter (1) eingebracht werden kann.

Wie weiterhin in der Figur 2 dargestellt, enthält der Innenraum des Teilvolumens, bzw. des gefalteten Käfigs (16) die erfindungsgemäße antimikrobielle Zusammensetzung (13) in Form von Granulat (15). Das Granulat (15) weist einen Durchmesser auf, der größer ist als der Durchmesser der Perforationen in den Seitenflächen des Käfigs (16). Hierdurch wird wirkungsvoll vermieden, dass das Granulat (15) durch die Perforation des Käfigs (16) in den Innenraum (8) des Behälters (1) gelangt, d. h. aus dem Teilvolumen (16) austritt.

Das Gewicht des Granulats (15) in dem Innenraum des Teilvolumens (16) beträgt trotz derselben Oberfläche (900 cm²) und bei gleicher antimikrobieller Wirksamkeit lediglich rund 63 g. Weiterhin nimmt das Granulat (15) nur ein Volumen von rund 80 ml ein. Dies ist damit zu begründen, dass bei Verwendung von Granulat (15) im Vergleich zu Schwallplatten (14) die Oberfläche der erfindungsgemäßen antimikrobiellen Zusammensetzung (13) in etwa um den Faktor 3 erhöht wird. Somit kann das durch die antimikrobielle Zusammensetzung (13) im Innenraum (8) des Behälters (1) belegte Volumen vorteilhaft minimiert werden.

Das Granulat (15) antimikrobielle Zusammensetzung besteht aus: der erfindungsgemäßen Komplexverbindung aus einem mit einer n-Alkancarbonsäure amphiphil modifizierten Polyesterpolyol (Bolthorn H40) und 1,3 Gew.-% Silber im 1:9-Verhältnis mit einem Co-Polyamid 6/66.

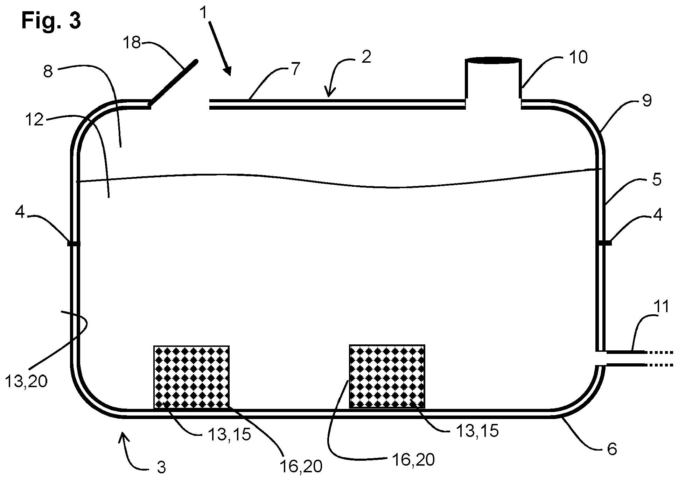

Figur 3 zeigt einen schematischen Schnitt durch einen erfindungsgemäßen Behälter (1), der ebenfalls dem Behälter (1) der Figur 1 oder Figur 2 im Wesentlichen entspricht.

Der Behälter (1) besteht aus einem Coextrudat eines Kunststoffes (HDPE) mit der erfindungsgemäßen antimikrobiellen Zusammensetzung (13), die als Schicht (19) auf der inneren Oberfläche des Behälters (1) angeordnet ist. Erneut wurden zunächst zwei Halbschalen (2,3) hergestellt, die dann zu dem hohlkörperartigen Behälter (1) zusammengeschweißt wurden. Vorteilhafterweise führt eine solche Coextrusion zu einer im Wesentlichen vollständigen Auskleidung des Innenraums (8) des Behälters (1) mit der erfindungsgemäßen Zusammensetzung (13).

Neben der Schicht (19) sind weiterhin zwei Teilvolumina (16) im Innenraum (8) des Behälters (1) angeordnet, die mit der erfindungsgemäßen Zusammensetzung (13) gefüllt sind. Bei den beiden Teilvolumina (16) handelt es sich um aus Kunststoff bestehende Netze (20). Beide Netze (20) enthalten die erfindungsgemäße antimikrobielle Zusammensetzung (13) als Granulat (15) mit einem Durchmesser von ungefähr 2 mm. Die Maschenweite der beiden Netze (20) ist geringer als dieser Durchmesser des Granulats (15).

Da das Granulat (15), bzw. die antimikrobielle Zusammensetzung (13) eine Dichte aufweist, die größer als 1 ist, sinken die beiden mit Granulat (15) gefüllten Netze (20) auf den Behälterboden (6). Eine Befestigung der beiden Netze (20) an dem Behälterboden (6) ist nicht gegeben. Dies hat unter anderem den Vorteil, dass die beiden Teilvolumina (16) leicht in den Behälter (1) einzubringen und/oder aus diesem zu entnehmen sind. Weiterhin wird durch die erhaltene Beweglichkeit der beiden Teilvolumina (16) in dem Behälter (1) gewährleistet, dass die hierin enthaltene antimikrobielle Zusammensetzung (13) regelmäßig durchmischt wird und so eine verbesserte Abgabe der Metallionen in die Betriebsflüssigkeit (12) erreicht wird.

Die mit Granulat (15) gefüllten Netze (20) können leicht durch die Revisionsklappe (18) in den Behälter (1) eingebracht werden und/oder entnommen werden. Vorteilhafterweise können so die mit Granulat (15) gefüllten Netze (20) erst nach der Befüllung des Behälters (1) mit Betriebsflüssigkeit (12) in den Behälter (1) eingebracht werden, was beispielsweise durch den Führer des Kraftfahrzeugs erfolgen kann. Dies ist insbesondere daher von Vorteil, da eine Befestigung der Netze (20) nicht erforderlich ist.

Die antimikrobielle Zusammensetzung besteht aus: der erfindungsgemäßen Komplexverbindung aus einem mit n-Hexadecansäure amphiphil modifizierten Polyethylenimin und 1,3 Gew.-% Silber im 1:9-Verhältnis mit einem Co-Polyamid 6/66.

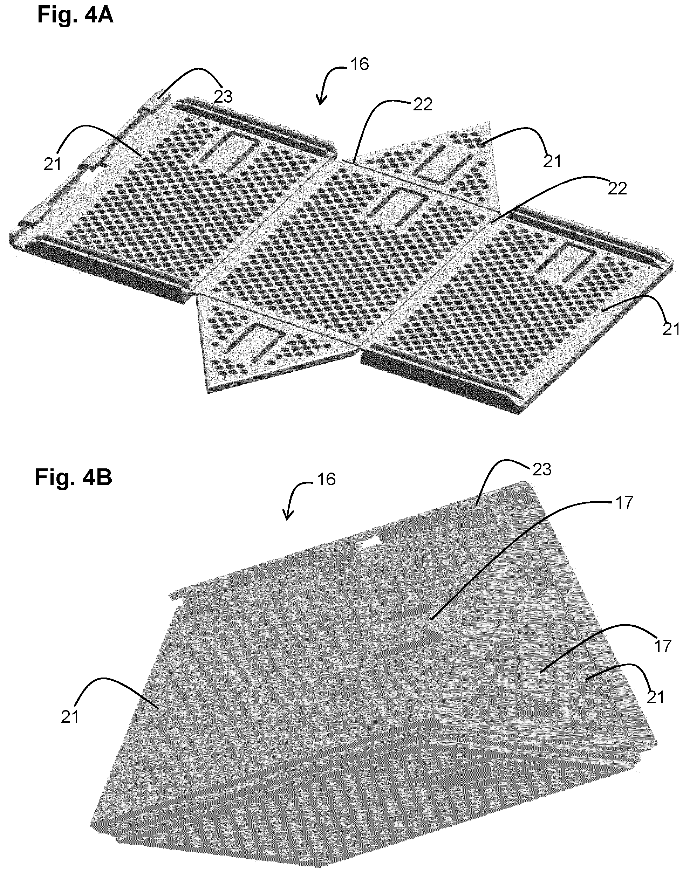

Figur 4a zeigt eine detailliertere schematische Ansicht des in der Figur 2 dargestellten Teilvolumens, bzw. Einbauteils (14, 16). Dargestellt ist der bereits zuvor beschriebene faltbare Käfig (16). Dieser wurde aus einem Kunststoff, insbesondere aus HDPE, im Spritzgussverfahren hergestellt. Wie ebenfalls zuvor erwähnt, ist in einer weiteren ganz bevorzugten Ausführungsform das Teilvolumen, bzw. der Käfig (16) ebenfalls aus der erfindungsgemäßen antimikrobiellen Zusammensetzung (13) hergestellt. Dies ist trotz der erhöhten Metallion Konzentration möglich, dass sich bei diesem Teilvolumen (16) um ein nichttragendes Element des Behälters (1) handelt.

Der Käfig (16) hat die Form eines dreiseitigen, geraden Prismas mit perforierten Seitenflächen (21). Die Perforation besteht aus regelmäßig in den Seitenflächen (21) des Käfigs (16) angeordneten Löchern bzw. Öffnungen mit einem Durchmesser von 2 mm. Hierüber wird erreicht, dass der nach der Faltung des Käfigs (16) entstehende Innenraum mit dem Innenraum (8) des Behälters (1) fluidverbunden ist.

Zur Gewährleistung der Faltung des Käfigs (16) sind die perforierten Seitenflächen (21) über Filmscharniere (22) miteinander verbunden. Weiterhin gewährleistet eine Verbindungseinrichtung (23), die als Clipverbindung ausgeführt ist, dass der Käfig (16) nach der Faltung in seinem gefalteten Zustand verbleibt. Hierbei greifen zwei C-Clips, die an einer ersten Seitenfläche (21) des Käfigs (16) angeordnet sind in zwei korrespondierende Aussparungen (nicht dargestellt) ein, die an einer nach Faltung direkt an die erste Seitenfläche (21) des Käfigs (16) anliegende zweite Seitenfläche (21) angeordnet sind.

In der Figur 4b ist eine Ansicht des zusammengefalteten Käfigs (16) aus der Figur 4a zu erkennen. Dargestellt sind hier weiterhin drei der auf jeder Seitenfläche (21) des Käfigs (16) angeordneten lösbaren Verbindungseinrichtungen (17) mittels derer der gefaltete Käfig (16) mit der inneren Oberfläche des Behälterbodens (6) verbunden wird. Wie zuvor erwähnt, kann prinzipiell eine Befestigung des Teilvolumens (16) an jeglicher beliebigen Stelle innerhalb des Innenraums (8) des Behälters (1) erfolgen, wobei der Bodenbereich jedoch aus den angegebenen Gründen bevorzugt wird.

Die Verbindungseinrichtung (17) besteht vorzugsweise aus einem Schwalbenschwanz, der in eine entsprechende Ausnehmung in der inneren Oberfläche der Behälterwandung (9) eingreift, bzw. in diese eingeschoben werden kann. Zur Absicherung gegen ein Herausrutschen weist die Verbindungseinrichtung (17) vorzugsweise weiterhin eine Rastnase auf, die ebenfalls in eine entsprechende Ausnehmung der inneren Oberfläche der Behälterwandung (9) eingreift. Hierdurch wird gewährleistet, dass das Teilvolumen (16), bzw. der Käfig sicher im Innenraum (8) des Behälters (1) befestigt werden und dennoch bei Bedarf ausgetauscht werden kann.

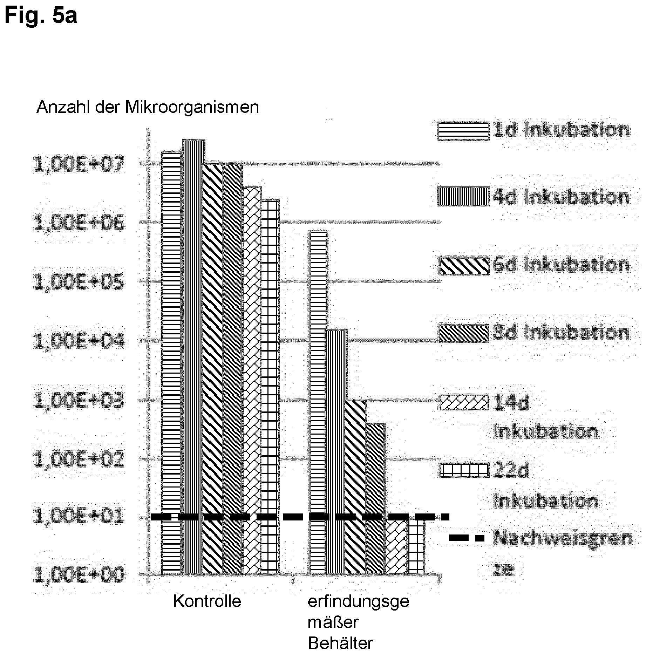

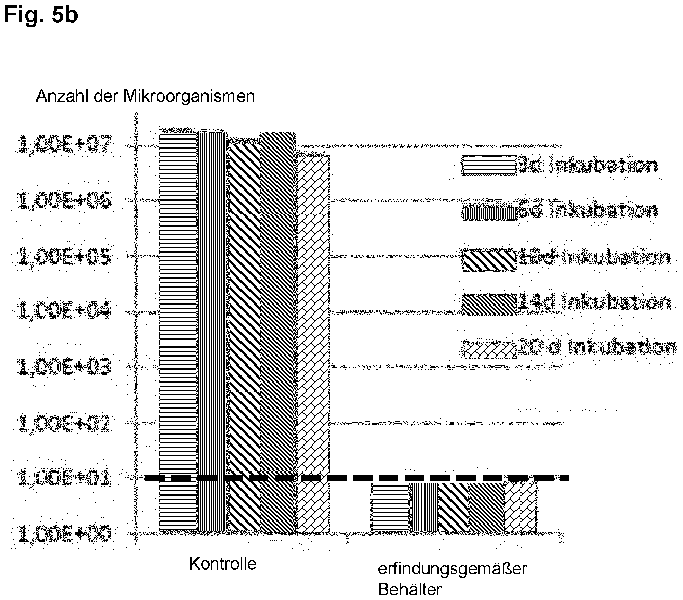

Die Figur 5 zeigt das Ergebnis zweier experimenteller Nachweise zur Wirksamkeit der erfindungsgemäßen Zusammensetzung (13) .

Hierbei wurde zunächst der in der Figur 1 dargestellte erfindungsgemäße Behälter (1) mit einem Behälter mit identischem Volumen verglichen, der jedoch nicht die erfindungsgemäße Zusammensetzung (13) enthielt (Kontrollbehälter). Die Ergebnisse sind in der Figur 5a dargestellt.

Im Einzelnen wurde deionisiertes Wasser (200 mS) entweder in dem erfindungsgemäßen Behälter (1) gelagert oder aber in dem Kontrollbehälter.

Der erfindungsgemäße Behälter (1) enthielt wie oben ausgeführt zwei Schwallplatten (14) als Einbauteile, die zusammen eine Oberfläche von 900 cm² und ein Schussgewicht von 180 g aufwiesen.

Die beiden Schwallplatten wurden im Spritzgussverfahren aus der erfindungsgemäßen Zusammensetzung (13) hergestellt. Diese bestand aus 10 Gew.-% der erfindungsgemäßen Komplexverbindung aus einem mit n-Hexadecansäure amphiphil modifizierten Polyethylenimin und 1,3 Gew.-% Silber im 1:9-Verhältnis mit einem Co-Polyamid 6/66 als hydrophiles Polymer und wies einen Anteil von 1,3 Gew.-% an antimikrobielle wirksamem Silber auf.

Nach bestimmten Inkubationszeiten wurden Proben aus beiden Behältern entnommen, um die Anzahl der hierin befindlichen Mikroorganismen nachzuweisen. Die Nachweisbestimmungen wurden nach einem Tag, vier Tagen, sechs Tagen, acht Tagen, 14 Tagen und 22 Tagen durchgeführt.

Wie aus der Figur 5a zu entnehmen ist, zeigte sich bei dem Kontrollbehälter im Wesentlichen keine Reduktion der Anzahl der in dem Wasser befindlichen Mikroorganismen. Demgegenüber trat bei dem erfindungsgemäßen Behälter (1) bereits nach einem Tag eine Reduktion um eine Größenordnung ein. Bereits nach 14 Tagen wurde die Anzahl der in dem Wasser befindlichen Mikroorganismen durch die Bevorratung in dem erfindungsgemäßen Behälter (1) bis unterhalb der Nachweisgrenze wirksam reduziert. Dieser Effekt hielt auch im weiteren Verlauf des Experiments (22 Tage) an.

Das Experiment wurde im Anschluss mit dem in Figur 2 dargestellten erfindungsgemäßen Behälter (1) wiederholt, die Ergebnisse dieses Experiments sind der Figur 5b zu entnehmen. Im Unterschied zu dem zuvor genannten Experiment wurde zwar dieselbe Menge (180 g) der antimikrobiellen Zusammensetzung (13) verwendet. Diese lag jedoch als Granulat (15) vor, welches mittels eines Teilvolumens, bzw. eines Käfigs (16) in das Innere des Behälters (1) eingebracht wurde.

Wie aus der Figur 5b zu entnehmen ist, zeigte sich hinsichtlich des Kontrollbehälters kein Unterschied zu dem in Figur 5a dargestellt Experiment. Demgegenüber wurde jedoch bereits nach drei Tagen der Inkubation eine Reduktion der Anzahl der in dem Wasser befindlichen Mikroorganismen unterhalb die Nachweisgrenze erreicht. Wie ebenfalls aus der Figur 5b zu entnehmen ist, hielt dieser Effekt ebenfalls über den verbleibenden Zeitraum der Inkubation an.

Zusammengefasst belegen die Experimente eindrucksvoll die verlässliche und langanhaltende Wirksamkeit der erfindungsgemäßen antimikrobiellen Zusammensetzung (1).

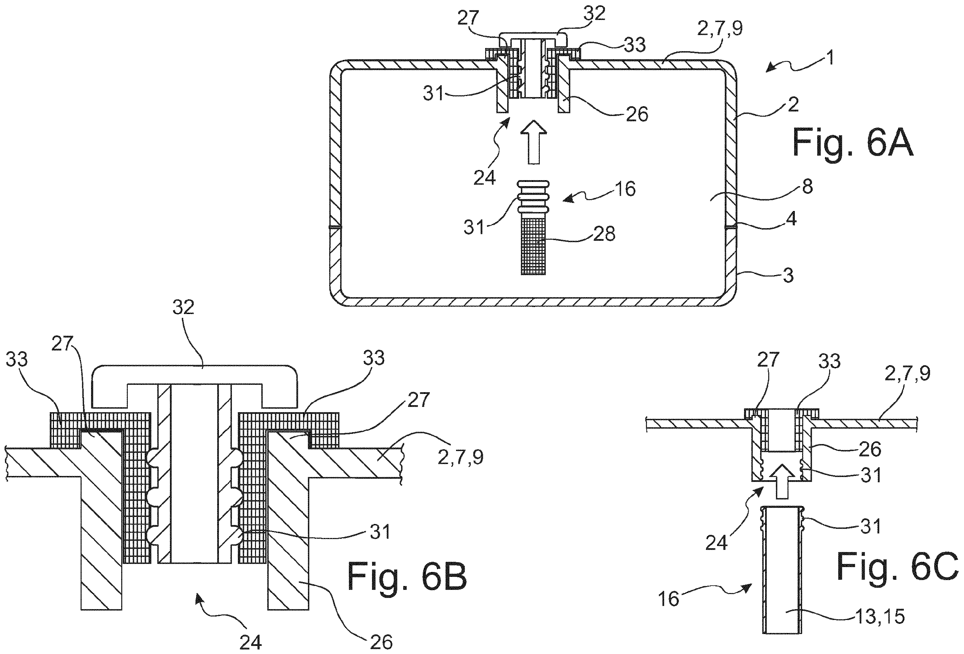

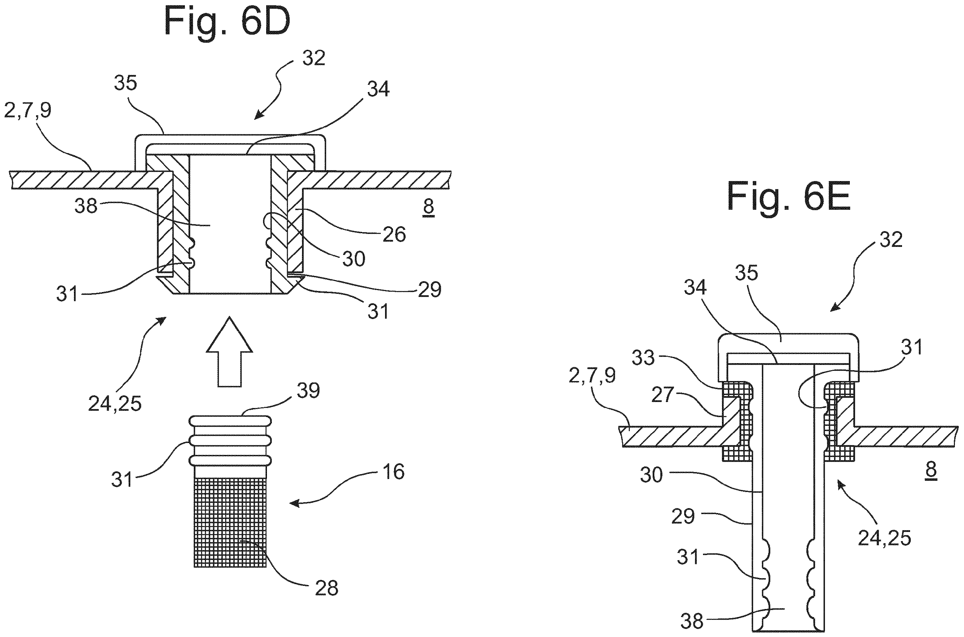

Die Figuren 6 bis 9 zeigen Ausführungsformen, bei denen die antimikrobielle Zusammensetzung (13) in Form eines Granulats (15) und innerhalb eines Teilvolumens (16) angeordnet vorliegt, wobei das Teilvolumen (16) mittels einer Befestigungseinrichtung reversibel an dem Behälter (1) befestigt und im Innenraum (8) des Behälters angeordnet ist und wobei eine verschließbare Öffnung (24) in der Behälterwand (2, 3, 5, 6, 7, 9) Bestandteil dieser Befestigungseinrichtung ist.

Figur 6A zeigt einen schematischen Schnitt durch den erfindungsgemäßen Behälter (1), bei dem eine verschließbare Öffnung (24) des Behälters zur Befestigung eines Teilvolumens (16) genutzt wird, welches in seinem Innenraum angeordnet antimikrobielles Granulat (nicht dargestellt) enthält.

Wie zu erkennen ist, besteht der Behälter (1) aus einer Behälteroberschale (2) und einer Behälterunterschale (3), die an einer Schweißnaht (4) miteinander verbunden sind.

In der Behälterdecke (7) ist eine verschließbare Öffnung (24) angeordnet. Der Behälter (1) kann weitere Öffnungen, insbesondere z.B. Serviceöffnungen, aufweisen. Die verschließbare Öffnung (24) weist sowohl eine Einkragung (26) der Behälterwand in den Innenraum (8) des Behälters auf, als auch eine Auskragung (27) der Behälterwand in Richtung der Umgebung des Behälters. Die verschließbare Öffnung (24), sowie die Auskragung (27) und die Einkragung (26) bilden einen Kanal durch die Behälterwandung (9). Hierbei verringern sich die lichte Weite der Einkragung (26) und der Auskragung (27) in Richtung des Innenraums des Behälters (8). Dementsprechend verringert sich der Durchmesser des Kanals durch die Behälterwand (9) in Richtung des Innenraums des Behälters (8).

Die verschließbare Öffnung (24) ist Bestandteil einer Befestigungseinrichtung, mittels derer das Teilvolumen (16) reversibel an dem Behälter (1) befestigt und im Innenraum des Behälters (8) angeordnet werden kann.

Von außen, d.h. von der Umgebung des Behälters (1) her, in die verschließbare Öffnung (24) eingesetzt ist ein Verschluss (32) zu erkennen. Der Verschluss (32) verschließt die verschließbare Öffnung (24) fluiddicht. Der Verschluss (32) weist an seiner Außenwandung mehrere Verbindungsmittel (31) auf, über die er mittelbar die verschließbare Öffnung (24) kontaktiert. Zwischen der Außenwandung des Verschlusses und der verschließbaren Öffnung (24) ist eine Gummimuffe (33) angeordnet, die eine sichere Verbindung des Verschlusses (32) in der verschließbaren Öffnung (24) gewährleistet. Dieser sichere Sitz wird durch die oben beschriebene Verringerung des Durchmessers des Kanals durch die Behälterwand (9) in Richtung des Innenraums des Behälters (8) noch verstärkt. Auch die Gummimuffe (33) wurde von außen in die verschließbare Öffnung (24) eingesetzt.

Ebenfalls dargestellt ist ein Teilvolumen (16), das als im Wesentlichen zylinderförmiger Käfig ausgeführt ist und einen Gitterbereich (28) aufweist. Innerhalb des Teilvolumens (16) ist das nicht dargestellte Granulat aus antimikrobieller Zusammensetzung angeordnet. Die Durchmesser der Gitteröffnungen sind geringer als die Durchmesser der Granulatpartikel, wodurch ein Austreten des Granulats aus dem Teilvolumen wirksam vermieden wird. Das Teilvolumen (16) wurde einstückig aus einem Kunststoff spritzgegossen.

Ebenfalls zu erkennen ist, dass das Teilvolumen (16) an seiner Außenwandung Verbindungsmittel (31) aufweist, welche an dem Gitterbereich (28) abgewandten Ende des Teilvolumens (16) angeordnet sind. Das Teilvolumen (16) ist in die verschließbare Öffnung (14) vom Innenraum des Behälters (8) her einsetzbar und dort kraftschlüssig und/oder formschlüssig befestigbar. Das Einsetzen des Teilvolumens (16) in die verschließbare Öffnung (24) wird durch den in der Figur 6A dargestellten, nach oben gerichteten Pfeil symbolisiert. Bei dem Einsetzen des Teilvolumens (16) in die verschließbare Öffnung (24) kontaktiert das Teilvolumen (16) mit seinen Verbindungsmitteln (31) die Innenwand des Verschlusses (32) und wird somit sicher in der verschließbaren Öffnung (24) befestigt. Gleichzeitig wird das in dem Teilvolumen (16) angeordnete antimikrobielle Granulat innerhalb des Innenraums des Behälters (8) positioniert. Im Innenraum des Behälters (8) befindliche Betriebsflüssigkeit kann somit effizient antimikrobiell behandelt werden.

Figur 6B zeigt eine Vergrößerung des Bereichs der verschließbaren Öffnung (24) nach Figur 6A. Erneut zu erkennen sind die Behälterwandung (9), bzw. die Behälteroberschale (2) oder die Behälterdecke (7), innerhalb derer die verschließbare Öffnung (24) angeordnet ist. Die verschließbare Öffnung (24) weist eine Einkragung (26) sowie eine Auskragung (27) auf. In diese verschließbare Öffnung (24) wurde von der Außenseite her zunächst eine Gummimuffe (33) eingesetzt. Die Auskragung (27) unterstützt bzw. verbessert den Sitz der Gummimuffe (33). Nach der Muffe (33) wurde der Verschluss (32) - ebenfalls von außen - in die verschließbare Öffnung (24) eingesetzt. Der eingesetzte Verschluss (32) kontaktiert hierbei mit seinem Verbindungsmittel (31), dass an der Außenwandung des Verschlusses angeordnet ist, mittelbar, d. h. über die Gummimuffe (33), die verschließbare Öffnung (24). Da sich die lichte Weite der Einkragung (26) und der Auskragung (27) in Richtung des Innenraums des Behälters (8) leicht verringert, wird der Verschluss (32) sicher in der verschließbaren Öffnung (24) gehalten und verschließt diese fluiddicht.

Das nicht dargestellte Teilvolumen (16) ist vom Innenraum des Behälters her, beispielswiese über eine Serviceöffnung, in die verschließbare Öffnung einsetzbar und dort kraftschlüssig und/oder formschlüssig befestigbar.

Die Figur 6C zeigt eine Vergrößerung des Bereichs der verschließbaren Öffnung (24) nach einer weiteren Variante. Erneut zu erkennen sind die Behälterwandung (9), bzw. die Behälter Oberschale (2) oder die Behälterdecke (7), innerhalb derer eine verschließbare Öffnung (24) angeordnet ist. Die verschließbare Öffnung (24) weist eine Einkragung (26) sowie eine Auskragung (27) auf. In die verschließbare Öffnung (24) wurde von der Außenseite her eine Gummimuffe (33) eingesetzt. Zu erkennen ist auch in dieser Figur, dass die Auskragung (27) vorteilhaft die Positionierung und/oder Fixierung der Gummimuffe (33) unterstützt.

Nicht dargestellt ist der in die verschließbare Öffnung (24) einsetzbare Verschluss.

Die verschließbare Öffnung (24) weist an der Innenwandung der Einkragung (26) Verbindungsmittel (31) auf, die mit den Verbindungsmitteln (31) des Teilvolumens (16) zusammenwirken können. Hierzu kann das Teilvolumen (16) vom Innenraum des Behälters (8) her in die verschließbare Öffnung (24) eingeführt werden. Nach dem Einführen des Teilvolumens (16) in die verschließbare Öffnung (24) ist das Teilvolumen (16) sicher kraftschlüssig und/oder formschlüssig befestigt.

Das Teilvolumen (16) ist erneut als Käfig ausgeführt, wobei ebenfalls eine Gitterstruktur des Käfigs vorhanden ist, jedoch in der Abbildung nicht gezeigt wird. Das Teilvolumen (16) besteht aus Kunststoff und wurde im Spritzgussverfahren hergestellt. Innerhalb des Teilvolumens befindet sich nicht dargestelltes Granulat der antimikrobiellen Zusammensetzung.

Die Figur 6D zeigt eine Vergrößerung des Bereichs der verschließbaren Öffnung (24) nach einer weiteren Variante. Erneut zu erkennen sind die Behälterwandung (9), bzw. die Behälter Oberschale (2) oder die Behälterdecke (7), innerhalb derer die verschließbare Öffnung (24) angeordnet ist. Bei der verschließbaren Öffnung (24) handelt es sich um eine Be- und/oder Entlüftungsöffnung (25) des Behälters (1). Die verschließbare Öffnung (24) weist eine Einkragung (26) auf. In die verschließbare Öffnung (24) wurde von der Außenseite des Behälters (1) her ein Verschluss (32) eingesetzt, der die verschließbare Öffnung (24) verschließt.

Der Verschluss (32) weist an seiner Außenwandung (29) Verbindungsmittel (31) auf, worüber die Einkragung (26) der verschließbaren Öffnung (24) kontaktiert wird. Somit wird eine sichere formschlüssige und/oder kraftschlüssige Verbindung zwischen Verschluss (32) und verschließbare Öffnung (24) bzw. Befestigung des Verschlusses (32) in der verschließbaren Öffnung (24) gewährleistet.

Der Verschluss (32) weist zusätzlich an seiner Innenwandung (30) Verbindungsmittel (31) auf, die geeignet sind mit Verbindungsmittel (31) eines in die verschließbare Öffnung (24) einsetzbaren Teilvolumens (16) zusammenzuwirken und eine formschlüssige und/oder kraftschlüssige Verbindung zu erzeugen.

Der Verschluss (32) weist weiterhin einen ihn durchziehenden Kanal (38) auf. Der Verschluss (32) ist im Wesentlichen zylinderförmig ausgebildet, wobei eine erste Öffnung im Innenraum des Behälters (8) angeordnet ist. Die dieser ersten Öffnung des Verschlusses (32) gegenüberliegende Öffnung wird von einer semipermeablen Membran (34) verschlossen. Somit ist die durch den Verschluss (32) verschlossene verschließbare Öffnung (24) für Gas passierbar, nicht jedoch für Flüssigkeiten. Der Verschluss (32) weist weiterhin einen Deckel (35) auf, der oberhalb der Membran (34) angeordnet ist und diese schützt.

Das in die verschließbare Öffnung (24) einsetzbare und als Käfig ausgeführte Teilvolumen (16) weist erneut einen Gitterbereich (28) auf. Innerhalb dieses Bereiches des Teilvolumens (16) ist das Granulat aus antimikrobieller Zusammensetzung angeordnet, jedoch in der Figur nicht dargestellt. An der dem Gitterbereich (28) gegenüberliegenden Ende des Teilvolumens (16) sind an dessen Außenwanderung Befestigungsmittel (31) angeordnet, die mit den Befestigungsmittel (31) an der Innenwandung (30) des Verschlusses (32) zusammenwirken. Weiterhin weist das im Wesentlichen zylinderförmige Teilvolumen (16) an derselben Seite eine Öffnung (39) auf. Die dieser Öffnung (39) gegenüberliegende Seite des zylinderförmigen Teilvolumens (16) ist verschlossen.

Das Teilvolumen (16) kann von der Innenseite des Behälters (8) her in die verschließbare Öffnung (24) eingesetzt werden. Es kann ebenfalls zunächst in den Verschluss (32) eingesetzt werden und daraufhin zusammen mit dem Verschluss (32) von der Außenseite des Behälters her in die verschließbare Öffnung (24,25) eingesetzt werden und/oder zusammen mit dem Verschluss aus der verschließbaren Öffnung (24,25) entnommen und hiernach beispielsweise getauscht werden. Somit wird eine erleichterte Wartungsfähigkeit des Behälters von der Außenseite des Behälters her erreicht.

Die Figur 6E zeigt eine Vergrößerung des Bereichs der verschließbaren Öffnung (24) nach einer weiteren Variante. Erneut zu erkennen sind die Behälterwandung (9), bzw. die Behälteroberschale (2) oder die Behälterdecke (7), innerhalb derer eine verschließbare Öffnung (24) angeordnet ist. Bei der verschließbaren Öffnung (24) handelt es sich um eine Be- und/oder Entlüftungsöffnung (25) des Behälters (1). Die verschließbare Öffnung (24) weist eine Auskragung (27) auf.

Eine Gummimuffe (33) wurde in die verschließbare Öffnung (24) eingesetzt und kontaktiert erneut Behälterwand (9) und Auskragung (27). Der Verschluss (32) wurde hiernach von der Außenseite des Behälters (1) her in die verschließbare Öffnung (24) über eine Presspassung eingesetzt und verschließt die verschließbare Öffnung (24) sicher. Hierzu befinden sich an der Außenwandung (29) des Verschlusses (32) Verbindungsmittel (31), welche mittelbar die verschließbare Öffnung (24) über die darin angeordnete Gummimuffe (33) kontaktieren.

Der Verschluss (32) weist erneut einen ihn durchziehenden Kanal (38) auf und ist im Wesentlichen zylinderförmig ausgebildet. Eine erste Öffnung des Verschlusses (32) ist im Innenraum des Behälters (8) angeordnet. Die dieser ersten Öffnung des Verschlusses (32) gegenüberliegende Öffnung wird von einer semipermeablen Membran (34) verschlossen. Somit ist die durch den Verschluss (32) verschlossene verschließbare Öffnung (24) für Gas passierbar, nicht jedoch für Flüssigkeiten. Der Verschluss (32) weist weiterhin einen Deckel (35) auf, der oberhalb der Membran (34) angeordnet ist und diese schützt.

An der Innenwandung des Verschlusses (30) sind weitere Verbindungsmittel (31) angeordnet, die mit den Verbindungsmitteln des nicht dargestellten Teilvolumens zusammenwirken können.

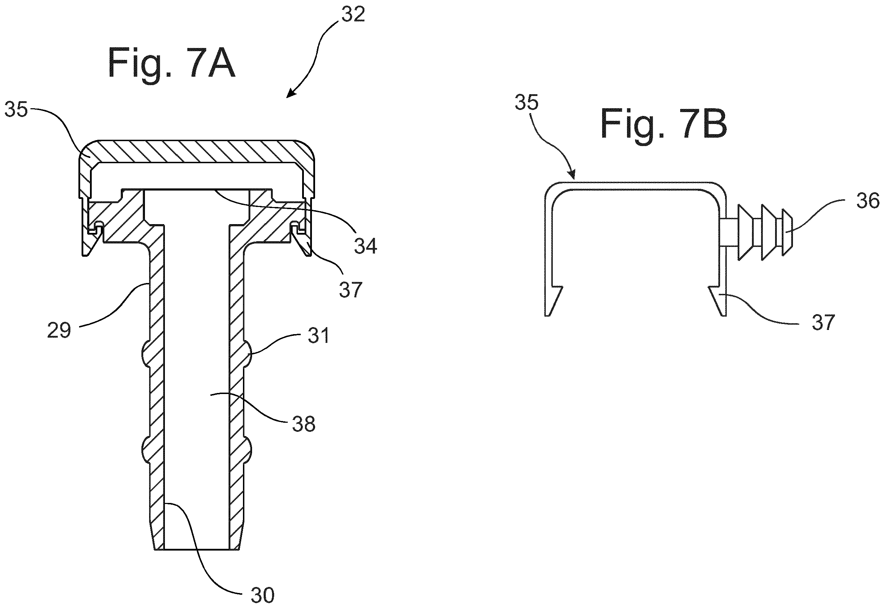

Die Figur 7A zeigt eine schematische Detailansicht einer Variante des in die verschließbare Öffnung (24) einsetzbaren erfindungsgemäßen Verschlusses (32). Zu erkennen ist zunächst die im Wesentlichen zylinderförmige Ausgestaltung des Verschlusses (32), wodurch ein den Verschluss (32) durchziehen der Kanal (38) gebildet wird. An dem einen Ende dieses Kanals (38) ist eine semipermeable Membran (34) angeordnet, welche die Öffnung dieses Kanals (38) verschließt. Die gegenüberliegende Öffnung des Kanals (38) verbleibt offen.

Weiterhin zu erkennen sind Verbindungsmittel (31), die auf der Außenwandung des Verschlusses (29) angeordnet sind und die geeignet sind, eine kraftschlüssige und/oder formschlüssige Verbindung mit der verschließbaren Öffnung (24) herzustellen, wenn der Verschluss (32) in diese Öffnung (24) eingesetzt wird. Der Verschluss (32) kann weiterhin in der Figur nicht dargestellte Verbindungsmittel (31) aufweisen, die an der Innenwandung (30) des Verschlusses angeordnet sind und die geeignet sind, eine kraftschlüssige und/oder formschlüssige Verbindung mit dem in die Öffnung (24) einsetzbaren Teilvolumen bzw. mit an diesem angeordneten Verbindungsmitteln herzustellen.

Der Verschluss (32) weist weiterhin einen Deckel (35) auf, der oberhalb der semipermeablen Membran (34) angeordnet ist und diese schützt. Der Deckel weist hierzu Verbindungsmittel (37) auf, die beim Aufsetzen des Deckels (35) auf den Verschluss (32) den Deckel (35) nach Art einer Clipverbindung sicher, jedoch reversibel befestigen.

Die Figur 7B zeigt eine schematische Detailansicht des Deckels (35), der geeignet ist auf den Verschluss (32) aufgesetzt zu werden. Zu erkennen sind erneut die Verbindungsmittel des Deckels (37), die eine formschlüssige und kraftschlüssige Befestigung des Deckels (35) an dem Verschluss (32) erlauben. Zu erkennen ist weiterhin ein Anschluss für einen Schlauch (36), der nach der Art eines Nippels an dem Deckel (35) angeordnet ist. An diesem Schlauchanschluss (36) ist insbesondere ein Be- und/oder Entlüftungsschlauch befestigt, wodurch beispielsweise die Wattiefe eines Kraftfahrzeugs, in welches der erfindungsgemäße Behälter eingebaut wurde, erhöht werden kann.

Sowohl der Verschluss (32) als auch der Deckel (35) sind aus Kunststoff und im Spritzgussverfahren hergestellt.

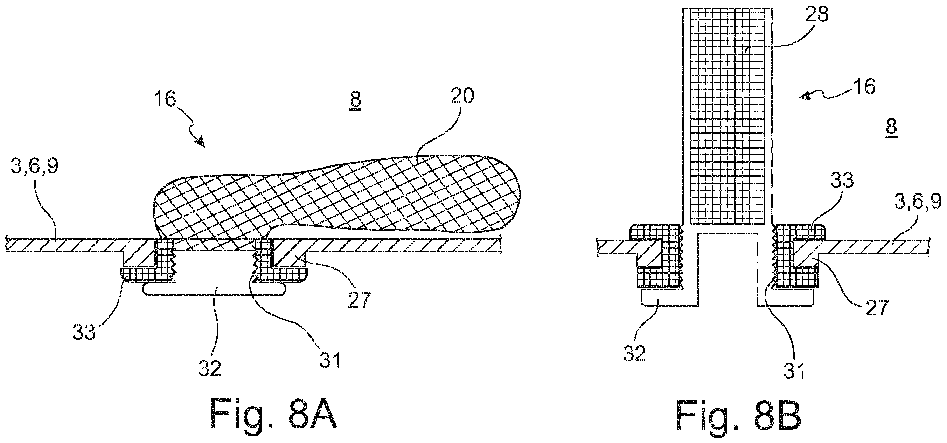

Die Figur 8A zeigt eine schematische Darstellung eines von außen in die im Behälterboden (6) des erfindungsgemäßen Behälters (1) angeordnete verschließbare Öffnung (24) eingesetzten und dort befestigten Teilvolumens (16) in Form eines Textilnetzes (20).

Zu erkennen sind die Behälterwandung (9), bzw. die Behälterunterschale (3) bzw. der Teil des Behälterbodens (6), innerhalb dessen eine verschließbare Öffnung (24) angeordnet ist. Die verschließbare Öffnung (24) weist eine Auskragung (27) auf. Zunächst wurde eine Gummimuffe (33) in die verschließbare Öffnung (24) eingesetzt. Daraufhin wurde das als Textilnetz (20) ausgeführte Teilvolumen (16), welches das nicht dargestellte Granulat aus der antimikrobiellen Zusammensetzung enthält, von der Außenseite des Behälters (1) her in die verschließbare Öffnung des Behälters (24) eingesetzt.

Das Teilvolumen (16) ist mit einem Verschluss (32) verbunden, sodass das Teilvolumen (16) zusammen mit dem hiermit verbundenen Verschluss (32) von der Außenseite des Behälters her in die verschließbare Öffnung des Behälters (24) eingesetzt wurde. Nach dem Einsetzen ist der Verschluss (32) im Wesentlichen außerhalb des Behälters (1) angeordnet und verschließt die verschließbare Öffnung (24), während das Teilvolumen (16,20) und damit das Granulat aus antimikrobieller Zusammensetzung im Innenraum des Behälters (8) angeordnet ist. Die Öffnungen in dem Textilnetz (20) ermöglichen ein Durchströmen der im Behälter (1) befindlichen Betriebsflüssigkeit, während das Granulat aus antimikrobieller Zusammensetzung wirkungsvoll innerhalb des Innenraums des Textilnetzes (20) zurückgehalten wird.

An der Außenwandung des Verschlusses (29) befinden sich Verbindungsmittel (31), die beim Einsetzen in die verschließbare Öffnung (24) eine Befestigung des Verschlusses (32) und damit des Teilvolumens (16) über eine Presspassung mit der Gummimuffe (33) ermöglichen.

Zu Wartungszwecken kann die reversible Verbindung/Befestigung einfach gelöst werden und das Teilvolumen (16,20) zusammen mit dem Verschluss (32) aus dem Behälter entnommen werden, um beispielsweise verbrauchte antimikrobielle Zusammensetzung auszutauschen. Da die verschließbare Öffnung (24) an der Behälterunterseite (6) angeordnet ist, kann eine solche Wartung vorteilhafter Weise auch ohne Demontage des Behälters (1) von einem KFZ erfolgen.

Die Figur 8B zeigt eine schematische Darstellung eines von außen in die im Behälterboden (6) des erfindungsgemäßen Behälters (1) angeordnete verschließbare Öffnung (24) eingesetzten und dort befestigten Teilvolumens (16) in Form eines zylinderförmigen Käfigs mit einer Gitterstruktur (28).

Zu erkennen sind die Behälterwandung (9), bzw. die Behälterunterschale (3) bzw. der Teil des Behälterbodens (6), innerhalb dessen eine verschließbare Öffnung (24) angeordnet ist. Die verschließbare Öffnung (24) weist eine Auskragung (27) auf. Zunächst wurde eine Gummimuffe (33) in die verschließbare Öffnung (24) eingesetzt. Daraufhin wurde das Teilvolumen (16), welches das nicht dargestellte Granulat aus der antimikrobiellen Zusammensetzung enthält, von der Außenseite des Behälters (1) her in die verschließbare Öffnung des Behälters (24) eingesetzt.

Das Teilvolumen (16) ist einstückig mit einem Verschluss (32) hergestellt, sodass das Teilvolumen (16) zusammen mit dem hiermit verbundenen Verschluss (32) von der Außenseite des Behälters her in die verschließbare Öffnung des Behälters (24) eingesetzt wurde. Nach dem Einsetzen ist der Verschluss (32) im Wesentlichen außerhalb des Behälters (1) angeordnet und verschließt die verschließbare Öffnung (24), während das Teilvolumen (16) und damit das Granulat aus antimikrobieller Zusammensetzung im Innenraum des Behälters (8) angeordnet ist. Die Öffnungen in dem Gitterbereich (28) des Teilvolumens (16) ermöglichen ein Durchströmen der im Behälter (1) befindlichen Betriebsflüssigkeit, während das Granulat aus antimikrobieller Zusammensetzung wirkungsvoll zurückgehalten wird.

An der Außenwandung des Verschlusses befinden sich Verbindungsmittel (31), die beim Einsetzen in die verschließbare Öffnung (24) eine Befestigung des Verschlusses (32) und damit des Teilvolumens (16) über eine Presspassung mit der Gummimuffe (33) ermöglichen.

Zu Wartungszwecken kann die reversible Verbindung/Befestigung einfach gelöst werden und das Teilvolumen (16) aus dem Behälter entnommen werden, um beispielsweise verbrauchte antimikrobielle Zusammensetzung auszutauschen. Da die verschließbare Öffnung (24) an der Behälterunterseite (6) angeordnet ist, kann eine solche Wartung vorteilhafter Weise auch ohne Demontage des Behälters (1) von einem KFZ erfolgen.

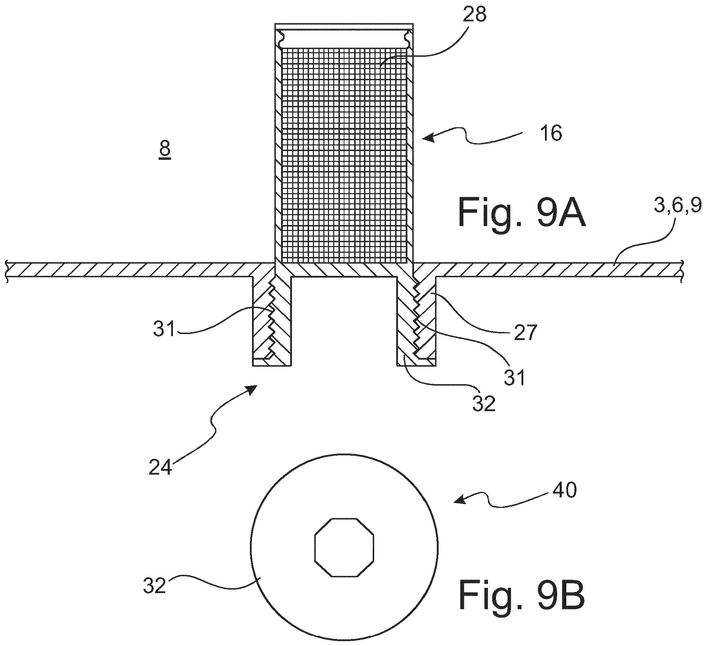

Die Figur 9 zeigt eine schematische Darstellung eines von der Außenseite des Behälters (1) in die Behälterwanderung (9), insbesondere die Behälterunterschale (3) bzw. den Behälterboden (6), eingeschraubten Teilvolumens (16).

Der Behälterboden (6) weist erneut eine verschließbare Öffnung (24) auf, die ihrerseits eine Auskragung (27) aufweist. Entlang des durch die Öffnung (24) und die Auskragung (27) durch die Behälterwand (9) gebildeten Kanals ist als Verbindungsmittel (31) ein Gewinde angeordnet.

Das Teilvolumen (16) ist einstückig mit einem Verschluss (32) hergestellt, sodass das Teilvolumen (16) zusammen mit dem hiermit verbundenen Verschluss (32) von der Außenseite des Behälters her in die verschließbare Öffnung des Behälters (24) eingesetzt wurde. Nach dem Einsetzen ist der Verschluss (32) im Wesentlichen außerhalb des Behälters (1) angeordnet und verschließt die verschließbare Öffnung (24), während das Teilvolumen (16) und damit das Granulat aus antimikrobieller Zusammensetzung im Innenraum des Behälters (8) angeordnet ist. Die Öffnungen in dem Gitterbereich (28) des Teilvolumens (16) ermöglichen ein Durchströmen der im Behälter (1) befindlichen Betriebsflüssigkeit, während das Granulat (15) aus antimikrobieller Zusammensetzung (13) wirkungsvoll im Innenraum des Teilvolumens (16) zurückgehalten wird.

Die an der Außenwandung des Verschlusses angeordneten Verbindungsmittel (31) des Verschlusses sind ebenfalls als Gewinde ausgeführt, die mit dem Gewinde der verschließbaren Öffnung (24) zusammenwirken und einen fluiddichten Verschluss der verschließbaren Öffnung (24) gewährleisten.

Die Figur 9B zeigt eine Aufsicht auf die Stirnseite (40) des Verschlusses (32) des Teilvolumens (16) und einem hierin angeordneten Innensechskantprofil.

Zu Wartungszwecken kann die reversible Verbindung/Befestigung einfach durch Herausschrauben gelöst und das Teilvolumen (16) aus dem Behälter entnommen werden, um beispielsweise verbrauchte antimikrobielle Zusammensetzung auszutauschen. Da die verschließbare Öffnung (24) an der Behälterunterseite (6) angeordnet ist, kann eine solche Wartung vorteilhafter Weise auch ohne Demontage des Behälters (1) von einem KFZ erfolgen.

### Bezugszeichenliste

- 1: Behälter; Betriebsflüssigkeitsbehälter
- 2: Behälteroberschale
- 3: Behälterunterschale
- 4: Schweißnaht
- 5: Seitenwand des Behälters
- 6: Behälterboden; Behälterunterseite
- 7: Behälterdecke; Behälteroberseite
- 8: Innenraum des Behälters
- 9: Behälterwandung; umlaufende Wandung des Behälters
- 10: Befülleinrichtung; Einfüllstutzen
- 11: Entnahmeeinrichtung; Schlauch
- 12: Wasser oder wässrige Lösung; Betriebsflüssigkeit; wässrige Reinigungslösung
- 13: Antimikrobielle Zusammensetzung
- 14: Einbauteil; Platte; Schwallelement; perforierte Schwallplatte
- 15: Granulat aus antimikrobieller Zusammensetzung
- 16: Teilvolumen; Einbauteil; Käfig; Netz; Käfig aus antimikrobieller Zusammensetzung
- 17: Lösbare Verbindungseinrichtung; Schwalbenschwanz mit Rastnase
- 18: Öffnung; Revisionsklappe
- 19: Coextrudierte Schicht auf der inneren Oberfläche der Behälterwandung
- 20: Netz; Kunststoffnetz, Textilnetz; gefüllt mit antimikrobiellem Granulat
- 21: Seitenflächen; perforierte Seitenflächen
- 22: Filmscharnier
- 23: Verbindungseinrichtung; Clipverbindung
- 24: Verschließbare Öffnung in der Wand des Behälters
- 25: Be- und/oder Entlüftungsöffnung
- 26: Einkragung; Einkragung der Behälterwand
- 27: Auskragung; Auskragung der Behälterwand
- 28: Gitterbereich des Teilvolumens
- 29: Außenwandung des Verschlusses
- 30: Innenwandung des Verschlusses
- 31: Verbindungsmittel; Gewinde, Mittel für eine Schraubverbindung, Mittel für eine Pass-Sitz-Verbindung, Mittel für eine Press-Passungs-Verbindung, Mittel für eine Bajonettverbindung, Mittel für eine Clip-Verbindung
- 32: Verschluss
- 33: Muffe; Gummimuffe
- 34: Semipermeable Membran
- 35: Deckel
- 36: Anschluss für einen Schlauch; Nippel
- 37: Verbindungsmittel des Deckels; Clip-Verbindung
- 38: Kanal durch den Verschluss
- 39: Öffnung in Teilvolumen; Öffnung in Käfig, Öffnung in Netz
- 40: Stirnseite des Verschlusses des Teilvolumens

## Patentansprüche

1. Behälter für die antimikrobielle Bevorratung von Wasser oder wässrigen Lösungen
**dadurch gekennzeichnet, dass**
in dem Innenraum des Behälters ein antimikrobielles Gemisch angeordnet ist, aufweisend ein hydrophiles Polymer und eine Komplexverbindung eines Metallsalzes mit einem Organoliganden, wobei die Komplexverbindung in einer Matrix aus dem hydrophilen Polymer eingebettet ist.

2. Behälter nach Anspruch 1, wobei der Anteil der Komplexverbindung an dem antimikrobiellen Gemisch in einem Bereich von ≥ 7 Gew.-% und ≤ 15 Gew.-%, bevorzugt > 10 Gew.-% und ≤ 13 Gew.-% liegt.

3. Behälter nach zumindest einem der zuvor stehenden Ansprüche, wobei der Anteil des Metalls in dem antimikrobiellen Gemisch ≥ 0,6 Gew.-%, bevorzugt ≥ 1,0 Gew.-% beträgt.

4. Behälter nach zumindest einem der zuvor stehenden Ansprüche, wobei das Verhältnis der Oberfläche des im Innenraum des Behälters angeordneten antimikrobiellen Gemisches zu dem Volumen des Innenraums des Behälters ≥ 0,06 ist.

5. Behälter nach zumindest einem der zuvor stehenden Ansprüche, wobei das antimikrobielle Gemisch zumindest abschnittsweise als Schicht auf der inneren Oberfläche der Wandung des Behälters und/oder auf einem im Innenraum des Behälters angeordnetem Einbauteil angeordnet ist.

6. Behälter nach zumindest einem der zuvor stehenden Ansprüche, wobei das antimikrobielle Gemisch als nichttragendes Einbauteil des Behälters und vorzugsweise als Platte oder als Käfig ausgestaltet ist.

7. Behälter nach zumindest einem der zuvor stehenden Ansprüche 1 bis 5, wobei das antimikrobielle Gemisch in Form eines Granulats vorliegt.

8. Behälter nach zumindest einem der zuvor stehenden Ansprüche, wobei das antimikrobielle Gemisch innerhalb eines Teilvolumens des Behälters angeordnet, der mit dem Innenraum des Behälters in Fluidverbindung steht.

9. Behälter nach Anspruch 8, wobei das antimikrobielle Gemisch in Form eines Granulats vorliegt,
wobei das Teilvolumen mittels einer Befestigungseinrichtung reversibel an dem Behälter befestigt und im Innenraum des Behälters angeordnet ist und
wobei eine verschließbare Öffnung in der Behälterwand Bestandteil der Befestigungseinrichtung ist.

10. Behälter nach Anspruch 9, wobei die verschließbare Öffnung in der Behälterwand eine Einkragung der Behälterwand in den Innenraum des Behälters und/oder eine Auskragung aufweist.

11. Behälter nach Anspruch 9 oder 10, wobei der Behälter einen von der Außenseite des Behälters her in die verschließbare Öffnung des Behälters einsetzbaren Verschluss aufweist und wobei das Teilvolumen vom Innenraum des Behälters her in die verschließbare Öffnung einsetzbar ist.

12. Behälter nach Anspruch 11, wobei der Verschluss in die verschließbare Öffnung eingesetzt und kraftschlüssig und/oder formschlüssig befestigt ist und wobei das Teilvolumen in die verschließbare Öffnung eingesetzt ist und dort kraftschlüssig und/oder formschlüssig befestigt ist.

13. Behälter nach Anspruch 9 oder 10, wobei das Teilvolumen oder ein mit einem Verschluss verbindbares Teilvolumen von der Außenseite des Behälters her in die verschließbare Öffnung des Behälters einsetzbar ist und
wobei das eingesetzte Teilvolumen oder der mit dem Teilvolumen verbindbare Verschluss geeignet ist, die verschließbare Öffnung zu verschließen.

14. Behälter nach Anspruch 13, wobei das Teilvolumen oder ein mit einem Verschluss verbindbares Teilvolumen in die verschließbare Öffnung des Behälters eingesetzt und dort kraftschlüssig und/oder formschlüssig befestigt ist und wobei das eingesetzte Teilvolumen oder der mit dem Teilvolumen verbundene Verschluss die verschließbare Öffnung verschließt.

15. Behälter nach einem der Ansprüche 10 bis 14, wobei sich die lichte Weite der Einkragung oder der Auskragung in Richtung des Innenraums des Behälters verringert.

16. Behälter nach einem der Ansprüche 9 bis 15, wobei es sich bei der verschließbaren Öffnung um eine Be- und/oder Entlüftungsöffnung des Behälters handelt.

17. Behälter nach einem der Ansprüche 11 bis 16, wobei der in die verschließbare Öffnung des Behälters einsetzbare oder eingesetzte Verschluss ein Ventil und/oder eine semipermeable Membran aufweist.

18. Behälter nach einem der Ansprüche 11 bis 17, wobei der in die verschließbare Öffnung des Behälters einsetzbare oder eingesetzte Verschluss einen Schlauchanschluss aufweist.

19. Behälter nach einem der Ansprüche 12 oder 14 bis 18, wobei die kraftschlüssige und/oder formschlüssige Befestigung durch ein Verbindungsmittel erfolgt und wobei es sich bei dem Verbindungsmittel um ein Gewinde, ein Mittel für eine Schraubverbindung, ein Mittel für eine Pass-Sitz-Verbindung, ein Mittel für eine Press-Passungs-Verbindung, ein Mittel für eine Bajonettverbindung oder ein Mittel für eine Clip-Verbindung handelt.

20. Behälter nach zumindest einem der zuvor stehenden Ansprüche, wobei das antimikrobielle Gemisch zumindest teilweise im Bodenbereich des Behälters angeordnet ist.

21. Behälter nach zumindest einem der zuvor stehenden Ansprüche, wobei das antimikrobielle Gemisch lösbar oder unlösbar mit der Behälterwand verbunden ist oder auf dem Behälterboden aufliegt.

22. Behälter nach zumindest einem der zuvor stehenden Ansprüche, wobei das hydrophile Polymer ein Polyacrylat oder ein Polyamid ist und wobei das Polyamid bevorzugt ausgewählt ist aus der Gruppe bestehend aus Polyamid 6, Polyamid 6.6, Polyamid 6.10, Polyamid 11, Polyamid 12 und Co-Polyamid 6/66.

23. Behälter nach zumindest einem der zuvor stehenden Ansprüche, wobei der Organoligand ausgewählt ist aus der Gruppe bestehend aus 2-Oxazolinderivat einer organischen Carbonsäure, Polyethylenimin und Polyesterpolyol.

24. Behälter nach Anspruch 23, wobei das Polyethylenimin oder das Polyesterpolyol mittels einer n-Alkancarbonsäure amphiphil modifiziert wurde.

25. Behälter nach zumindest einem der zuvor stehenden Ansprüche, wobei das Metallion des Metallsalzes ein Ion eines Metalls ist, ausgewählt aus der Gruppe bestehend aus Ag, Co, Cu, Mn, Mo, Os, Sn, Ti und Zn, wobei Ag bevorzugt ist.

26. Behälter nach zumindest einem der zuvor stehenden Ansprüche, wobei die antimikrobielle Bevorratung zu einer Reduktion der Anzahl der in dem Wasser oder der wässrigen Lösung enthaltenen Mikroorganismen um zumindest 50 % führt.

27. Verfahren zur antimikrobielle Bevorratung von Wasser oder wässrigen Lösungen unter Verwendung eines Behälters nach einem der zuvor stehenden Ansprüche.

## Claims

1. Container for antimicrobial storage of water or aqueous solutions,
**characterized in that**
an antimicrobial mixture is arranged in the interior of the container and comprises a hydrophilic polymer and a complex compound of a metal salt with an organic ligand, wherein the complex compound is embedded in a matrix consisting of the hydrophilic polymer.

2. Container according to claim 1, wherein the proportion of the complex compound in the antimicrobial mixture lies in a range from ≥ 7 wt.% and ≤ 15 wt.%, preferably > 10 wt.% and ≤ 13 wt.%.

3. Container according to at least one of the previous claims, wherein the proportion of the metal in the antimicrobial mixture is ≥ 0.6 wt.%, preferably ≥ 1.0 wt.%.

4. Container according to at least one of the previous claims, wherein the ratio of the surface area of the antimicrobial mixture arranged in the interior of the container to the volume of the interior of the container is ≥ 0.06.

5. Container according to at least one of the previous claims, wherein the antimicrobial mixture is at least partly arranged as a layer on the inner surface of the wall of the container and/or on an installation part arranged in the interior of the container.

6. Container according to at least one of the previous claims, wherein the antimicrobial mixture is designed as a non-bearing installation part of the container and preferably as a plate or as a cage.

7. Container according to at least one of the previous claims 1 to 5, wherein the antimicrobial mixture is present in the form of a granulate.

8. Container according to at least one of the previous claims, wherein the antimicrobial mixture is arranged within a partial volume of the container, which is fluidically connected to the interior of the container.

9. Container according to claim 8, wherein the antimicrobial mixture is present in the form of a granulate,
wherein the partial volume is reversibly fastened to the container by means of a fastening device and arranged in the interior of the container, and
wherein a closeable opening in the container wall is a component of the fastening device.

10. Container according to claim 9, wherein the closeable opening in the container wall has an inward protrusion of the container wall into the interior of the container and/or an outward protrusion.

11. Container according to claim 9 or 10, wherein the container has a closure which is insertable from the outside of the container into the closeable opening of the container, and wherein the partial volume is insertable from the interior of the container into the closeable opening.

12. Container according to claim 11, wherein the closure is inserted into and fastened in a force-locking and/or form-locking manner to the closeable opening, and wherein the partial volume is inserted into and fastened in a force-locking and/or form-locking manner to the closeable opening.

13. Container according to claim 9 or 10, wherein the partial volume or a partial volume connectable to a closure is insertable from the outside of the container into the closeable opening of the container, and
wherein the inserted partial volume or the closure connectable to the partial volume is suitable for closing the closeable opening.

14. Container according to claim 13, wherein the partial volume or a partial volume connectable to a closure is inserted into and fastened in a force-locking and/or form-locking manner to the closeable opening, and
wherein the inserted partial volume or the closure connected to the partial volume closes the closeable opening.

15. Container according to one of claims 10 to 14, wherein the clear width of the inward protrusion or the outward protrusion decreases in the direction of the interior of the container.

16. Container according to one of claims 9 to 15, wherein the closeable opening is an air-inlet and/or ventilation opening of the container.

17. Container according to one of claims 11 to 16, wherein the closure insertable or inserted into the closeable opening of the container has a valve and/or a semipermeable membrane.

18. Container according to one of claims 11 to 17, wherein the closure insertable or inserted into the closeable opening of the container has a hose connection.

19. Container according to one of claims 12 or 14 to 18, wherein the force-locking and/or form-locking fastening is carried out by a connection means, and wherein said connection means is a thread, a means for a screw connection, a means for an interference-fit connection, a means for a press-fit connection, a means for a bayonet connection, or a means for a clip connection.

20. Container according to at least one of the previous claims, wherein the antimicrobial mixture is arranged, at least to some extent, in the bottom area of the container.

21. Container according to at least one of the previous claims, wherein the antimicrobial mixture is detachably or non-detachably connected to the container wall or rests on the container bottom.

22. Container according to at least one of the previous claims, wherein the hydrophilic polymer is a polyacrylate or a polyamide, and wherein the polyamide is preferably selected from the group consisting of polyamide 6, polyamide 6.6, polyamide 6.10, polyamide 11, polyamide 12, and copolyamide 6/66.

23. Container according to at least one of the previous claims, wherein the organic ligand is selected from the group consisting of 2-oxazoline derivatives of an organic carboxylic acid, polyethyleneimine, and polyester polyol.

24. Container according to claim 23, wherein the polyethyleneimine or the polyester polyol was amphiphilically modified by means of an n-alkane carboxylic acid.

25. Container according to at least one of the previous claims, wherein the metal ion of the metal salt is an ion of a metal selected from the group consisting of Ag, Co, Cu, Mn, Mo, Os, Sn, Ti, and Zn, wherein Ag is preferred.

26. Container according to at least one of the previous claims, wherein the antimicrobial storage leads to a reduction in the number of microorganisms contained in the water or the aqueous solution by at least 50%.

27. Method for antimicrobial storage of water of aqueous solutions using a container according to one of the previous claims.

## Revendications

1. Récipient pour le stockage antimicrobien d'eau ou de solutions aqueuses **caractérisé en ce**
**qu'**un mélange antimicrobien est disposé dans l'espace intérieur du récipient, présentant un polymère hydrophile et un composé complexe d'un sel métallique avec un ligand organique, le composé complexe étant incorporé dans une matrice constituée par le polymère hydrophile.

2. Récipient selon la revendication 1, dans lequel la proportion du composé complexe dans le mélange antimicrobien se trouve dans une plage de ≥ 7 % en poids à ≤ 15 % en poids, de préférence de > 10 % en poids à ≤ 13 % en poids.

3. Récipient selon au moins l'une des revendications précédentes, dans lequel la proportion du métal dans le mélange antimicrobien est ≥ 0,6 % en poids, de préférence ≥ 1,0 % en poids.

4. Récipient selon au moins l'une des revendications précédentes, dans lequel le rapport de la surface du mélange antimicrobien disposé dans l'espace intérieur du récipient par rapport au volume de l'espace intérieur du récipient est ≥ 0,06.

5. Récipient selon au moins l'une des revendications précédentes, dans lequel le mélange antimicrobien est disposé, au moins dans certaines régions, sous forme de couche sur la surface intérieure de la paroi du récipient et/ou sur une partie intégrée disposée dans l'espace intérieur du récipient.

6. Récipient selon au moins l'une des revendications précédentes, dans lequel le mélange antimicrobien est réalisé sous forme de partie intégrée non porteuse du récipient et de préférence sous forme de plaque ou de cage.

7. Récipient selon au moins l'une des revendications précédentes 1 à 5, dans lequel le mélange antimicrobien se présente sous forme de granulés.

8. Récipient selon au moins l'une des revendications précédentes, dans lequel le mélange antimicrobien est disposé à l'intérieur d'un volume partiel du récipient, lequel volume partiel est en communication fluidique avec l'espace intérieur du récipient.

9. Récipient selon la revendication 8, dans lequel le mélange antimicrobien se présente sous forme de granulés,
dans lequel le volume partiel est fixé de manière réversible au récipient au moyen d'un dispositif de fixation et est disposé dans l'espace intérieur du récipient et
dans lequel une ouverture pouvant être fermée dans la paroi de récipient fait partie du dispositif de fixation.

10. Récipient selon la revendication 9, dans lequel l'ouverture pouvant être fermée dans la paroi de récipient présente une collerette de la paroi de récipient dans l'espace intérieur du récipient et/ou une saillie.

11. Récipient selon la revendication 9 ou 10, dans lequel le récipient présente une fermeture pouvant être insérée, depuis la face extérieure du récipient, dans l'ouverture pouvant être fermée du récipient, et dans lequel le volume partiel peut être inséré dans l'ouverture pouvant être fermée depuis l'espace intérieur du récipient.

12. Récipient selon la revendication 11, dans lequel la fermeture est insérée dans l'ouverture pouvant être fermée et est fixée à force et/ou par complémentarité de forme, et dans lequel le volume partiel est inséré dans l'ouverture pouvant être fermée et y est fixé à force et/ou par complémentarité de forme.

13. Récipient selon la revendication 9 ou 10, dans lequel le volume partiel ou un volume partiel pouvant être relié à une fermeture peut être inséré dans l'ouverture pouvant être fermée du récipient depuis la face extérieure du récipient et
dans lequel le volume partiel inséré ou la fermeture pouvant être reliée au volume partiel convient pour fermer l'ouverture pouvant être fermée.

14. Récipient selon la revendication 13, dans lequel le volume partiel ou un volume partiel pouvant être relié à une fermeture est inséré dans l'ouverture pouvant être fermée du récipient et y est fixé à force et/ou par complémentarité de forme et
dans lequel le volume partiel inséré ou la fermeture reliée au volume partiel ferme l'ouverture pouvant être fermée.

15. Récipient selon l'une des revendications 10 à 14, dans lequel la largeur libre de la collerette ou de la saillie se réduit en direction de l'espace intérieur du récipient.

16. Récipient selon l'une des revendications 9 à 15, dans lequel l'ouverture pouvant être fermée est une ouverture de ventilation et/ou d'évacuation du récipient.

17. Récipient selon l'une des revendications 11 à 16, dans lequel la fermeture pouvant être insérée ou insérée dans l'ouverture pouvant être fermée du récipient présente une valve et/ou une membrane semi-perméable.

18. Récipient selon l'une des revendications 11 à 17, dans lequel la fermeture pouvant être insérée ou insérée dans l'ouverture pouvant être fermée du récipient présente un raccord de tuyau.

19. Récipient selon l'une des revendications 12 ou 14 à 18, dans lequel la fixation à force et/ou par complémentarité de forme est réalisée par un moyen de liaison et dans lequel le moyen de liaison est un filetage, un moyen pour une liaison vissée, un moyen pour une liaison à siège d'ajustement, un moyen pour une liaison à ajustement serré, un moyen pour une liaison à baïonnette ou un moyen pour une liaison à clip.

20. Récipient selon au moins l'une des revendications précédentes, dans lequel le mélange antimicrobien est au moins partiellement disposé dans la zone de fond du récipient.

21. Récipient selon au moins l'une des revendications précédentes, dans lequel le mélange antimicrobien est relié de manière amovible ou non amovible à la paroi de récipient ou repose sur le fond de récipient.

22. Récipient selon au moins l'une des revendications précédentes, dans lequel le polymère hydrophile est un polyacrylate ou un polyamide et dans lequel le polyamide est de préférence choisi dans le groupe constitué par le polyamide 6, le polyamide 6.6, le polyamide 6.10, le polyamide 11, le polyamide 12 et le co-polyamide 6/66.

23. Récipient selon au moins l'une des revendications précédentes, dans lequel le ligand organique est choisi dans le groupe constitué par le dérivé 2-oxazoline d'un acide carboxylique organique, du polyéthylèneimine et du polyester polyol.

24. Récipient selon la revendication 23, dans lequel le polyéthylèneimine ou le polyester polyol a été modifié de manière amphiphile au moyen d'un acide n-alcanecarboxylique.

25. Récipient selon au moins l'une des revendications précédentes, dans lequel l'ion métallique du sel métallique est un ion d'un métal choisi dans le groupe constitué par Ag, Co, Cu, Mn, Mo, Os, Sn, Ti et Zn, Ag étant préféré.

26. Récipient selon au moins l'une des revendications précédentes, dans lequel le stockage antimicrobien conduit à une réduction d'au moins 50 % du nombre de micro-organismes contenus dans l'eau ou la solution aqueuse.

27. Procédé permettant le stockage antimicrobien d'eau ou de solutions aqueuses à l'aide d'un récipient selon l'une des revendications précédentes.
